(19) Europäisches Patentamt
European Patent Office
Office européen des brevets

(11) **EP 2 780 671 B1**

(12) **EUROPÄISCHE PATENTSCHRIFT**

(45) Veröffentlichungstag und Bekanntmachung des Hinweises auf die Patenterteilung:
**22.01.2020   Patentblatt 2020/04**

(21) Anmeldenummer: **12775264.0**

(22) Anmeldetag: **23.10.2012**

(51) Int Cl.:
*G01F 1/84* (2006.01)     *G01F 25/00* (2006.01)

(86) Internationale Anmeldenummer:
**PCT/EP2012/070932**

(87) Internationale Veröffentlichungsnummer:
**WO 2013/072164 (23.05.2013 Gazette 2013/21)**

(54) **VERFAHREN ZUM ÜBERWACHEN DER SCHWINGUNGSEIGENSCHAFTEN EINES CORIOLIS-DURCHFLUSSMESSGERÄTES UND CORIOLIS-DURCHFLUSSMESSGERÄT**

METHOD OF MONITORING THE VIBRATION CHARACTERISTICS OF A CORIOLIS FLOWMETER AND CORIOLIS FLOWMETER

PROCÉDÉ DE SURVEILLANCE DE CHARACTÉRISTIQUES DE VIBRATION D'UN DÉBITMÈTRE DU TYPE CORIOLIS ET DÉBITMÈTRE DU TYPE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2011   DE 102011086395**

(43) Veröffentlichungstag der Anmeldung:
**24.09.2014   Patentblatt 2014/39**

(73) Patentinhaber: **Endress+Hauser Flowtec AG**
**4153 Reinach (BL) (CH)**

(72) Erfinder: **SCHERRER, Rémy**
**F-68960 Oberdorf (FR)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
DE-A1-102008 059 920     US-A1- 2003 070 495
US-A1- 2007 017 274     US-A1- 2010 281 999

**Beschreibung**

Die vorliegende Erfindung betrifft ein Verfahren zum Überwachen der Schwingungseigenschaften in einem Coriolis-Durchflussmessgerät, das in eine Rohrleitung einsetzbar ist, wobei das Coriolis-Durchflussmessgerät ein zu mechanischen Schwingungen anregbares Schwingungssystem mit mindestens einem, von Medium durchströmbaren Messrohr aufweist. Ferner betrifft die vorliegende Erfindung ein entsprechend ausgebildetes Coriolis-Durchflussmessgerät.

Nach dem Coriolis-Prinzip wirkt immer dann, wenn sich in einem System eine rotierende und eine, zumindest teilweise senkrecht zu der Rotationsachse verlaufende, geradlinige Massebewegung überlagern, auf die bewegte Masse eine zusätzliche Kraft, die als Coriolis-Kraft bezeichnet wird. Dieser Effekt wird in bekannter Weise in Coriolis-Durchflussmessgeräten ausgenutzt, beispielsweise um einen Massedurchfluss eines, in einer Rohrleitung strömenden Fluides zu bestimmen. Coriolis-Durchflussmessgeräte weisen in der Regel eines oder mehrere Messrohre auf, wobei diese, je nach Gerätetyp, in unterschiedlichen Konfigurationen ausgebildet sein können. Das System aus dem mindestens einen Messrohr (und gegebenenfalls weiteren Anbauteilen, Gegenschwingerarmen, etc.) bildet ein Schwingungssystem, das je nach Messrohr-Konfiguration entsprechende natürliche Schwingungsmodi, wie beispielsweise Biegeschwingungen (Grundmodus sowie Modi höherer Ordnung), Torsionsschwingungen (Grundmodus sowie Modi höherer Ordnung), etc., aufweist.

Ein Coriolis-Durchflussmessgerät wird im Einsatz in eine, von einem Fluid durchströmte Rohrleitung derart eingesetzt, dass das mindestens eine Messrohr von dem Fluid durchströmt wird. Das Fluid wird dabei vorzugsweise durch eine Flüssigkeit gebildet, die je nach Anwendung unterschiedliche Viskositäten aufweisen kann und gegebenenfalls auch Feststoffe und/oder Gaseinschlüsse mitführen kann. Zur Bestimmung eines Massedurchflusses des Fluides wird das mindestens eine Messrohr durch mindestens einen Erreger zu Schwingungen angeregt. Der mindestens eine Erreger kann dabei beispielsweise durch einen elektromechanischen Erreger, der auf das betreffende Messrohr eine einem zugeführten Erregerstrom entsprechende Kraft ausübt, insbesondere einen elektrodynamischen Erreger, gebildet werden. In der Regel wird das Schwingungssystem auf einer Resonanzfrequenz desselben (beispielsweise des Grundmodus der Biegeschwingung) angeregt. Wird das mindestens eine Messrohr nicht von einem Fluid durchströmt, so schwingt das gesamte Messrohr in Phase. Wird das mindestens eine Messrohr von einem Fluid durchströmt, so wirkt auf die bewegte Masse (des Fluides) eine Coriolis-Kraft. Dies führt dazu, dass das Messrohr aufgrund der Coriolis-Kraft zusätzlich verformt wird und eine Phasenverschiebung entlang der Erstreckungsrichtung des jeweiligen Messrohres auftritt. Die Phasenverschiebung entlang eines Messrohres kann durch entsprechende Schwingungssensoren, die wiederum durch elektromechanische, insbesondere elektrodynamische, Sensoren gebildet werden können und die entlang der Erstreckungsrichtung des Messrohres beabstandet voneinander angeordnet sind, erfasst werden. Die Phasenverschiebung, die über die Schwingungssensoren erfassbar ist, ist proportional zu dem Massedurchfluss durch das Messrohr.

Zusätzlich oder alternativ können durch Coriolis-Durchflussmessgeräte auch weitere physikalische Messgrößen, wie beispielsweise eine Dichte oder eine Viskosität, eines in einer Rohrleitung strömenden Fluides bestimmt werden. Bei der Dichtemessung wird das Prinzip ausgenutzt, dass die Resonanzfrequenz (beispielsweise des Grundmodus der Biegeschwingung) von der schwingenden Masse und damit von der Dichte des durch das mindestens eine Messrohr strömenden Fluides abhängt. Durch Nachregeln der Anregungsfrequenz derart, dass das Schwingungssystem in seiner Resonanzfrequenz angeregt wird, kann die Resonanzfrequenz und daraus wiederum die Dichte des strömenden Fluides bestimmt werden.

Bei der Massedurchflussmessung sowie auch allgemein bei der Messung einer physikalischen Messgröße eines strömenden Fluides durch ein Coriolis-Durchflussmessgerät wird jeweils aus mindestens einer erfassten Größe, wie beispielsweise mindestens einer Sensorspannung, und gegebenenfalls weiteren Größen die zu bestimmende, physikalische Messgröße, wie beispielsweise ein Massedurchfluss, eine Dichte, eine Viskosität, etc., des strömenden Fluides berechnet. In diese Berechnung gehen unter anderem gerätespezifische Faktoren ein, die beispielsweise im Voraus im Rahmen einer Kalibrierung bestimmt werden. Solche gerätespezifischen Faktoren können sich jedoch über die Zeit ändern. Insbesondere treten bei vielen Anwendungen von Coriolis-Durchflussmessgeräten über die Zeit eine Abrasion (insbesondere bei in dem Fluid mitgeführten Partikeln), eine Korrosion (insbesondere bei aggressiven Medien) und/oder eine Beschichtung (insbesondere bei Medien, die zur Belagsbildung neigen) mindestens eines Messrohres auf. Die dadurch bedingten Änderungen des Schwingungsverhaltens des mindestens einen Messrohres verursachen einen Messfehler bei der Messung einer physikalischen Messgröße eines strömenden Fluides, insbesondere bei der Massedurchflussmessung.

Wünschenswert ist dabei, dass solch eine Abrasion, Korrosion und/oder Beschichtung mindestens eines Messrohres festgestellt werden kann, ohne dass hierzu ein Ausbau des Coriolis-Durchflussmessgerätes oder ein anderweitiger substantieller Eingriff erforderlich ist. Ferner ist wünschenswert, dass zur Durchführung der Diagnose eine Messung (insbesondere des Massedurchflusses, der Dichte und/oder der Viskosität) nicht unterbrochen werden muss. Dies ermöglicht, dass solch eine Diagnose auch kontinuierlich oder regelmäßig in vorbestimmten Zeitabständen durchgeführt werden kann. Darüber hinaus ist erstrebenswert, dass kein oder nur ein geringer zusätzlicher Energieverbrauch für die Durchführung der Diagnose entsteht.

Bisher bekannt sind verschiedene Diagnoseverfahren, durch welche die allgemein zur Beschreibung der Schwingungseigenschaften eines Coriolis-Schwingungssystems üblichen Parameter $K_0$ und Q bestimmbar sind. Dabei wird mit $K_0$ die Steifheit des Schwingungssystems (insbesondere des mindestens einen Messrohres und/oder Schwingungsarmes, etc.) und mit Q der Qualitätsfaktor bezeichnet. Ein Beispiel für ein bekanntes Diagnoseverfahren ist die Methode der Bestimmung des Qualitätsfaktors Q aus der Resonanzfrequenz $f_r$, aus der zu einer Phasenverschiebung von -45° zugehörigen Frequenz $f_{-45}$ und aus der zu einer Phasenverschiebung von +45° zugehörigen Frequenz $f_{+45}$, wie in der nachfolgenden Gleichung (1) dargestellt ist:

$$(1) \qquad Q = \frac{f_r}{f_{-45} - f_{+45}}$$

Dieses bekannte Diagnoseverfahren erfordert zur Durchführung jedoch eine erhebliche Zeitdauer, da jeweils abgewartet werden muss, bis sich das Schwingungssystem auf die betreffenden Frequenzen eingestellt hat. Ferner muss in der Regel die Durchflussmessung während der Durchführung des Diagnoseverfahrens unterbrochen werden. Dementsprechend besteht bei den bekannten Diagnoseverfahren ein weitergehender Optimierungsbedarf im Hinblick auf die oberhalb genannten, wünschenswerten Anforderungen.

Coriolis-Durchflussmessgeräte mit derartigen Diagnoseverfahren zur Erkennung von Erosion und Korrosion von Meßrohren oder Ablagerungen in Meßrohren sind zum Beispiel aus DE 10 2008 059 920 A1 und US 2007/0017274 A1 bekannt.

Die Aufgabe der vorliegenden Erfindung besteht darin, ein Verfahren zum Überwachen der Schwingungseigenschaften eines Schwingungssystems eines Coriolis-Durchflussmessgerätes und ein entsprechend ausgebildetes Coriolis-Durchflussmessgerät bereitzustellen, durch das zuverlässig Änderungen in den Schwingungseigenschaften feststellbar sind und das auch parallel zu einer Durchflussmessung (insbesondere des Massedurchflusses, der Dichte und/oder der Viskosität) durchführbar ist.

Die Aufgabe wird gelöst durch ein Verfahren gemäß Anspruch 1 sowie durch ein Coriolis-Durchflussmessgerät gemäß Anspruch 14. Vorteilhafte Weiterbildungen der Erfindung sind in den Unteransprüchen angegeben.

Gemäß der vorliegenden Erfindung wird ein Verfahren zum Überwachen der Schwingungseigenschaften in einem Coriolis-Durchflussmessgerät bereitgestellt. Das Coriolis-Durchflussmessgerät ist in eine Rohrleitung einsetzbar und weist ein zu mechanischen Schwingungen anregbares Schwingungssystem mit mindestens einem, von Medium durchströmbaren Messrohr auf. Das Verfahren weist nachfolgende Schritte auf:

A) Anregen des Schwingungssystems zu mechanischen Schwingungen gemäß einem Anregungs-Eingangssignal durch mindestens einen Erreger, wobei das Anregungs-Eingangssignal in Zeitabständen auftretende, kurzzeitige Signalmodulationen aufweist,

B) Sensorisches Erfassen mindestens einer Ansprechgröße der hervorgerufenen, mechanischen Schwingungen des Schwingungssystems,

C) Simulieren des angeregten Schwingungssystems durch ein digitales Modell, das mindestens einen anpassbaren Parameter aufweist, wobei das Simulieren das Anregen des digitalen Modells in der gleichen Weise wie das Schwingungssystem, das Berechnen einer Simulations-Ansprechgröße der simulierten Schwingungen gemäß dem digitalen Modell und das über mehrere Signalmodulationen hinweg durchgeführte, iterative Anpassen des mindestens einen, anpassbaren Parameters derart, dass die Simulations-Ansprechgröße der Ansprechgröße iterativ angenähert wird, umfasst, und

D) Ermitteln, ob durch den mindestens einen, iterativ ermittelten Parameterwert für den mindestens einen, anpassbaren Parameter oder durch mindestens eine, aus dem mindestens einen, iterativ ermittelten Parameterwert abgeleitete Größe ein zugehöriger Grenzwert überschritten wird.

Die in dem Anregungs-Eingangssignal in Zeitabständen auftretenden, kurzzeitigen Signalmodulationen zwingen sowohl das reale Schwingungssystem als auch das digitale Modell dazu, darauf zu reagieren. Anhand von einer (geeignet messbaren) Ansprechgröße (des realen Schwingungssystems) und einer (geeignet berechenbaren) Simulations-Ansprechgröße (des digitalen Modells) lassen sich diese Auswirkungen der kurzzeitigen Signalmodulationen auf das Schwingungssystem und auf das digitale Modell erfassen. Indem die Simulations-Ansprechgröße der Ansprechgröße iterativ durch iteratives Anpassen des mindestens einen, anpassbaren Parameters angenähert wird, kann so ein Parameterwert für den mindestens einen, anpassbaren Parameter iterativ ermittelt werden. Durch den Schritt des Ermittelns kann dann (z.B. durch Vergleichen mit einem, bei erstmaliger Inbetriebnahme des Schwingungssystems vorliegenden Parameterwert, durch Vergleichen mit einer herstellerseitig vorgegebenen Vergleichsgröße, durch Durchführen einer vorbestimmten Berechnung mit dem iterativ ermittelten Parameterwert und Vergleichen mit einer Vergleichsgröße, etc.) bestimmt werden, ob der mindestens eine, iterativ ermittelte Parameterwert noch innerhalb eines zulässigen Bereichs liegt oder nicht. Ergibt der Schritt des Ermittelns, dass nicht mehr innerhalb eines zulässigen Bereichs gearbeitet wird, können entsprechende Maßnahmen eingeleitet werden. Solche, einzuleitenden Maßnahmen können unter anderem die Ausgabe eines Hinweises, dass eine Wartung durchzuführen ist, die Ausgabe einer Fehlermeldung oder einer Alarmmeldung, eine entsprechende Korrektur eines ausgegebenen Messwertes, etc., umfassen. Dementsprechend kann durch das erfindungsgemäße Verfahren zuverlässig erfasst werden, ob Änderungen in den Schwingungseigenschaften in einem Coriolis-Durchflussmessgerät, die insbesondere durch eine Korrosion, eine Abrasion und/oder eine Belagsbildung an mindestens einem Messrohr bedingt sind, auftreten.

Indem das Anregungs-Eingangssignal nur in Zeitabständen auftretende und kurzzeitige Signalmodulationen aufweist, wird aufgrund der vergleichsweise hohen Zeitkonstante der mechanischen Schwingungen des Schwingungssystems die Durchflussmessung (zur Bestimmung des Massedurchflusses, der Dichte und/oder der Viskosität eines strömenden Mediums) nicht negativ durch diese kurzzeitigen Signalmodulationen beeinflusst. Dementsprechend kann das erfindungsgemäße Verfahren zum Überwachen der Schwingungseigenschaften parallel zu einer Durchflussmessung durchgeführt werden, ohne dass die Durchflussmessung hierzu unterbrochen werden muss. Insbesondere kann vorgesehen sein, dass das Verfahren zum Überwachen der Schwingungseigenschaften kontinuierlich parallel zu der Durchflussmessung oder in vorbestimmten (z.B. periodischen) Zeitabständen parallel zu der Durchflussmessung durchgeführt wird. Alternativ kann auch vorgesehen sein, dass das Verfahren nur auf Anforderung, die beispielsweise durch einen Nutzer oder durch eine übergeordnete, mit dem Coriolis-Durchflussmessgerät in Kommunikationsverbindung stehende Steuereinheit gestellt wird, durchgeführt wird. Weiterhin ist dadurch, dass das Anregungs-Eingangssignal nur in Zeitabständen auftretende und kurzzeitige Signalmodulationen aufweist, der zusätzliche Energieverbrauch, der zur Durchführung des erfindungsgemäßen Verfahrens erforderlich ist, gering.

Nachfolgend wird in den Fällen, in denen mindestens ein Erreger, Schwingungssensor, Messrohr, Parameter, Ansprechgröße, etc., vorgesehen ist, nicht jedesmal explizit auf die Möglichkeit der Vorsehung einer Mehrzahl dieser Bauteile bzw. Größen hingewiesen. Dennoch wird auf diese Möglichkeit weiterhin Bezug genommen.

Mit "Schwingungssystem" wird auf den Teil des Coriolis-Durchflussmessgerätes Bezug genommen, der im Einsatz des Coriolis-Durchflussmessgerätes (zur Durchführung einer Durchflussmessung) zu Schwingungen angeregt wird. Das Schwingungssystem kann dabei im Wesentlichen aus einem Messrohr (mit gegebenenfalls vorhandenen Anbauteilen), aus im Wesentlichen zwei oder mehreren Messrohren (mit gegebenenfalls vorhandenen Anbauteilen), aus im Wesentlichen mindestens einem Messrohr und mindestens einem (nicht von Medium durchströmten) Schwingarm (mit gegebenenfalls vorhandenen Anbauteilen), etc., gebildet werden. Das vorliegende Verfahren ist dabei unabhängig von dem jeweils angeregten Schwingungsmodus (Biegeschwingung, Torsionsschwingung, etc.) und unabhängig von der jeweiligen Konfiguration des mindestens einen Messrohres (geradlinig, bogenförmig, anderweitig gekrümmt, eines oder mehrere Messrohre, etc.) anwendbar. Vorzugsweise wird das Schwingungssystem in dem Grundmodus der Biegeschwingung angeregt. Insbesondere weist das Schwingungssystem mindestens einen Erreger, durch den das Schwingungssystem zu mechanischen Schwingungen anregbar ist, und mindestens einen Schwingungssensor, durch den mechanische Schwingungen des Schwingungssystems erfassbar sind, auf.

Mit "Anregungs-Eingangssignal" wird allgemein auf ein Signal Bezug genommen, das charakteristisch für die Anregung des Schwingungssystems ist. Insbesondere ist das Anregungs-Eingangssignal ein, dem mindestens einen Erreger unmittelbar oder ggf. auch in weiterverarbeiteter Form zugeführtes Signal, entsprechend dem durch den mindestens einen Erreger eine Kraft auf das Schwingungssystem ausgeübt wird. Das Anregungs-Eingangssignal kann beispielsweise durch eine, an den Erreger angelegte Anregungsspannung oder Anregungsenergie, einen, an den Erreger angelegten Anregungsstrom oder durch eine, von dem Erreger auf das Schwingungssystem ausgeübte Anregungskraft, etc., gebildet werden. Mit "Ansprechgröße" wird allgemein auf eine Größe Bezug genommen, die charakteristisch für die durch die Anregung hervorgerufenen Schwingungen des Schwingungssystems ist. Die Ansprechgröße kann beispielsweise durch eine Auslenkung der hervorgerufenen Schwingungen des Schwingungssystems, durch eine Geschwindigkeit dieser Schwingungen, oder durch eine zu der Geschwindigkeit der Schwingungen proportionale Sensorspannung, etc., gebildet werden. In Bezug auf die Simulation an dem digitalen Modell sind die oberhalb in Bezug auf das reale Schwingungssystem beschriebenen Größen entsprechend definiert. Eine "Anregung in der gleichen Weise" kann insbesondere derart realisiert werden, dass auch dem digitalen Modell das gleiche Anregungs-Eingangssignal wie dem realen Schwingungssystem zugeführt wird. Alternativ kann dem digitalen Modell auch ein anderweitiges Signal zugeführt werden, durch das in gleichwertiger Weise die Anregung des realen Schwingungssystems simuliert werden kann. Entsprechend wird mit "Simulations-Ansprechgröße" auf eine Größe Bezug genommen, die charakteristisch für die durch die Anregung hervorgerufenen, simulierten Schwingungen gemäß dem digitalen Modell ist. Die Ansprechgröße und die Simulations-Ansprechgröße können dabei zwei gleiche oder direkt vergleichbare, physikalische Größen sein. Dies ist aber nicht zwingend erforderlich. Vielmehr ist auch ausreichend, wenn diese für einen Vergleich bzw. für den Schritt des Annäherns ineinander gemäß einer vorbestimmten Regel überführbar sind.

Das digitale Modell ist dabei derart ausgebildet, dass es durch entsprechende Anpassung des mindestens einen, anpassbaren Parameters das reale Schwingungssystem zumindest soweit nachbilden kann, dass es bei Anregung in der gleichen Weise auch eine der Ansprechgröße entsprechende Simulations-Ansprechgröße bereitstellt. Insbesondere kann vorgesehen sein, dass das digitale Modell (bei entsprechender Anpassung des mindestens einen, anpassbaren Parameters) das reale Schwingungssystem identisch nachbildet, was den Vorteil mit sich bringt, dass auch der mindestens eine, anpassbare Parameter zu entsprechenden, bei dem realen Schwingungssystem definierten, physikalischen Parametern unmittelbar zugeordnet werden kann oder diesen direkt entspricht. Solche physikalische Parameter, die das reale Schwingungssystem charakterisieren (und die entsprechend auch in dem digitalen Modell so vorgesehen sein können) sind insbesondere der Qualitätsfaktor Q, die Steifheit $K_0$ des Schwingungssystems und die Resonanzfrequenz $\omega_r$ des Schwingungssystems.

Unter kurzzeitigen Signalmodulationen werden insbesondere Signalmodulationen verstanden, deren Zeitdauer kurz ist relativ zu der Periode der Datenrate, mit der ein Messsignal der Durchflussmessung ausgegeben wird (z.B. an eine Anzeige des Coriolis-Durchflussmessgerätes, über einen Feldbus, etc.). Typischerweise liegt die Datenrate, mit der ein Messsignal der Durchflussmessung ausgegeben wird, im Bereich von 50 bis 100 Hz (Hertz). Die Zeitdauer der Signalmodulation liegt beispielsweise im Bereich von 0,01 bis 0,05 der Zeitdauer der Periode der Datenrate, mit der ein Messsignal der Durchflussmessung ausgegeben wird. Beispielsweise beträgt die Datenrate der ausgegebenen Messwerte 50 Hz, während die Zeitdauer einer kurzzeitigen Signalmodulation jeweils 0,5 ms (ms: Millisekunde) beträgt. Die Abtastrate, mit der das (in der Regel analoge) Messsignal des mindestens einen Schwingungssensors abgetastet wird, ist demgegenüber deutlich höher und beträgt mehrere Kilohertz (z.B. 40 kHz). Auch die digitale Verarbeitung des so digitalisierten Messsignals innerhalb des Coriolis-Durchflussmessgerätes erfolgt in der Regel mit einer entsprechend hohen Frequenz (z.B. 40 kHz) oder mit einer Frequenz in diesem Bereich.

Vorzugsweise wird zumindest der Schritt des Simulierens (Schritt C)) und gegebenenfalls auch der Schritt des Ermittelns (Schritt D)) durch eine entsprechend ausgebildete Elektronik des Coriolis-Durchflussmessgerätes durchgeführt. Dies ist insbesondere bei dem Schritt des Simulierens vorteilhaft, da auf die hierfür erforderlichen Werte der Ansprechgröße direkt in dem Coriolis-Durchflussmessgerät zugegriffen werden kann (an der jeweiligen Stelle der Signalverarbeitung und damit mit ausreichend hoher Rate).

Bei dem Schritt des Simulierens erfolgt das iterative Anpassen insbesondere derart, dass jeweils mit einem Anfangswert für den mindestens einen, anpassbaren Parameter des digitalen Modells gestartet wird und damit die erste Berechnung durchgeführt wird. Anschließend erfolgt das Ändern des Wertes des mindestens einen, anpassbaren Parameters gemäß einem vorbestimmten Algorithmus, wie beispielsweise LMS (Least Mean Square), RLS (Recursive Mean Square), etc., derart, dass die Simulations-Ansprechgröße der Ansprechgröße angenähert wird bzw. gegen diese konvergiert. Welcher Algorithmus hier gut geeignet ist, hängt auch von der Art der Signalmodulationen und den vorhandenen Berechnungs-Resourcen ab. Gemäß einer Weiterbildung wird bei dem Schritt des Ermittelns (Schritt D)) derjenige, mindestens eine Parameterwert des jeweiligen anpassbaren Parameters als iterativ ermittelter Parameterwert eingesetzt (bzw. verwendet), bei welchem die zugehörige Simulations-Ansprechgröße der Ansprechgröße zu einem vorbestimmten Mindestmaß angenähert (bzw. konvergiert) ist. Vorzugsweise (und in der Regel ist dies der Fall) konvergiert bei dieser Anpassung auch der jeweilige Parameterwert des mindestens einen, anpassbaren Parameters jeweils gegen einen Wert. Ob die Simulations-Ansprechgröße bereits ausreichend an die Ansprechgröße angenähert (bzw. konvergiert) ist, kann insbesondere mittels einer Cost Function (deutsch: Zielfunktion) bestimmt werden, deren Funktionswert die zu minimierende Größe angibt (z.B. Betrag des Abstands oder quadratischer Abstand, etc., der Simulations-Ansprechgröße gegenüber der Ansprechgröße).

Gemäß einer Weiterbildung werden die kurzzeitigen Signalmodulationen des Anregungs-Eingangssignals jeweils durch eine kurzzeitige Frequenz- und/oder Amplitudenänderung des Anregungs-Eingangssignals gebildet. Eine solche Signalmodulation ist besonders einfach realisierbar.

Grundsätzlich ist nicht zwingend, dass die kurzzeitigen Signalmodulationen periodisch (d.h. in regelmäßigen Zeitabständen) in dem Anregungs-Eingangssignal auftreten. Im Hinblick auf eine einfache und möglichst wenig Prozessorleistung erfordernde Durchführung der Simulation und der Berechnungen ist jedoch bevorzugt, dass die kurzzeitigen Signalmodulationen periodisch in dem Anregungs-Eingangssignal auftreten. Weiterhin ist auch bevorzugt, dass die kurzzeitigen Signalmodulationen sehr kurz im Verhältnis zu der Periodendauer, innerhalb welcher sie auftreten, sind (z.B. Anteil von 0,01 bis 0,05). Auf diese Weise wird gewährleistet, dass über einen Großteil der Zeitdauer ein ungestörtes Anregungs-Eingangssignal vorliegt und damit die Durchflussmessung (zur Bestimmung des Massedurchflusses, der Dichte und/oder der Viskosität eines strömenden Mediums) nicht merklich beeinflusst wird. Gemäß der vorliegenden Erfindung ist ferner nicht zwingend, dass die wiederholt auftretenden, kurzzeitigen Signalmodulationen jeweils identisch sind. Im Hinblick auf eine einfache und möglichst wenig Prozessorleistung erforderliche Durchführung der Simulation und der Berechnungen ist jedoch bevorzugt, dass die Signalmodulationen jeweils durch einen identischen Signalverlauf gebildet werden.

Gemäß einer Weiterbildung werden die kurzzeitigen Signalmodulationen jeweils durch eine kurzzeitige Amplitudenänderung des Anregungs-Eingangssignals gebildet. Eine kurzzeitige Amplitudenänderung des Anregungs-Eingangssignals ist einfach umsetzbar. Ferner ist im Hinblick auf die parallel durchgeführte Simulation vorteilhaft, dass bei solch einer Anregung die Sprungantwort der Ansprechgröße untersucht werden kann. Besteht die kurzzeitige Amplitudenänderung in einer kurzzeitigen Verringerung der Amplitude (z.B. auf die Hälfte), so ist dies auch im Hinblick auf einen möglichst geringen Energieverbrauch vorteilhaft.

Gemäß einer Weiterbildung werden die Schritte des Anregens (Schritt A)), des sensorischen Erfassens (Schritt B)), des Simulierens (Schritt C)) und des Ermittelns (Schritt D)) parallel (d.h. zeitgleich) zu einer Durchflussmessung (zur Bestimmung des Massedurchflusses, der Dichte und/oder der Viskosität eines strömenden Mediums) durchgeführt. Auf diese Weise können die Schwingungseigenschaften kontinuierlich oder in regelmäßigen Zeitabständen während des Betriebs des Durchflussmessgerätes durchgeführt werden, ohne dass hierzu die Durchflussmessung unterbrochen werden muss.

Gemäß einer Weiterbildung werden die Ansprechgröße durch eine Geschwindigkeit der Schwingung (d.h. die Änderung der Auslenkung des Schwingungssystems pro Zeit) und die Simulations-Ansprechgröße durch eine Geschwindigkeit der simulierten Schwingung gebildet. An dem realen Schwingungssystem ist die Geschwindigkeit der Schwingung durch entsprechende Schwingungssensoren direkt messbar, die in der Regel eine, der Geschwindigkeit entsprechende Sensorspannung ausgeben. Dementsprechend kann an Stelle der Geschwindigkeit der Schwingung des realen Schwingungssystems sowie des digitalen Modells jeweils auch eine entsprechende Sensorspannung bzw. simulierte Sensorspannung verwendet werden, wobei die Umrechnung einfach durch einen konstanten Faktor ($K_{sens}$) erfolgt. Auf diesen Zusammenhang wird nicht jedesmal explizit hingewiesen. Vielmehr kann gleichermaßen auf die Geschwindigkeit der Schwingung wie auch auf die Sensorspannung (sowohl bei dem realen Schwingungssystem als auch bei dem digitalen Modell) Bezug genommen werden.

Gemäß einer Weiterbildung basiert das digitale Modell des angeregten Schwingungssystems auf einer Transfergleichung H(s) der nachfolgenden Form:

$$H(s) = \frac{U_{sens}(s)}{I_{exc}(s)} = \frac{K_{exc} K_0 K_{sens} s}{1 + \frac{s}{\omega_r Q} + \frac{s^2}{\omega_r^2}}$$

wobei

$U_{sens}(s)$ eine gemessene Sensorspannung im s-Raum ist, die eine Ansprechgröße bildet,
$I_{exc}(s)$ ein Erregerstrom im s-Raum ist, welcher ein Anregungs-Eingangssignal bildet,
$K_{exc}$ ein Skalierungsfaktor ist, durch welchen das Verhältnis einer, auf das Schwingungssystem ausgeübten Erregerkraft $F_{exc}$ zu dem Erregerstrom $I_{exc}$ angegeben wird ($K_{exc}=F_{exc}/I_{exc}$),
$K_0$ eine Steifheit des Schwingungssystems ist,
$K_{sens}$ ein Skalierungsfaktor ist, durch welchen das Verhältnis der gemessenen Sensorspannung $U_{sens}$ zu der Geschwindigkeit der Schwingung $V_1$ angegeben wird ($K_{sens}=u_{sens}/V_1$),
$V_1(s)$ die Geschwindigkeit der Schwingung im s-Raum ist, die proportional zu der Sensorspannung $U_{sens}$ ist,
$s=j\omega$ ist, wobei $\omega$ der Anregungsfrequenz des Schwingungssystems entspricht und $j^2=-1$ erfüllt, $\omega_r$ eine Resonanzfrequenz des jeweils angeregten Schwingungsmodus ist, und
Q ein Qualitätsfaktor ist, der das Abklingverhalten der Schwingungen des Schwingungssystems bei einer einmaligen Anregung beschreibt.

Diese Transfergleichung wird allgemein in dem Fachgebiet eingesetzt, um das Schwingungs-Ansprechverhalten des Schwingungssystems eines Coriolis-Durchflussmessgerätes zu beschreiben. Allgemein wird durch eine Transfergleichung eine Eingangsgröße (hier: Anregungs-Eingangssignal) zu einer Ausgangsgröße (hier: Ansprechgröße) in Beziehung gesetzt. Allgemein wird mit "s" der Laplace-Index beschrieben. Die oberhalb angegebene Beziehung $s=j\omega$ gilt nur für den harmonischen Fall, d.h. wenn das Schwingungssystem eingeschwungen ist. Von solch einem eingeschwungenen System kann in Bezug auf die vorliegende Erfindung ausgegangen werden. $U_{sens}(s)$, $I_{exc}(s)$ und $V_1(s)$ können jeweils auch einen komplexen Anteil aufweisen. Das digitale Modell muss dabei nicht exakt gemäß dieser Transfergleichung ausgebildet sein (d.h. nicht zwingend einer exakten Umwandlung der Transfergleichung in den z-Raum entsprechen). Vielmehr können (neben einer exakten Umwandlung in den z-Raum) auch Umformungen, Näherungen und/oder Vereinfachungen ausgehend von dieser Transfergleichung vorgenommen werden. Dieses Verständnis davon, dass das digitale Modell auf einer betreffenden physikalischen Beziehung "basiert", wird auch bei den nachfolgenden Weiterbildungen, bei denen eine derartige Formulierung gewählt wird, zugrundegelegt.

Gemäß einer Weiterbildung weist das Anregungs-Eingangssignal eine Frequenz auf, die im Wesentlichen der Resonanzfrequenz des Schwingungssystems entspricht. Dadurch werden erhebliche Vereinfachungen möglich, wie unterhalb noch im Detail erläutert wird. Insbesondere führt dies dazu, dass im Zeitraum das Anregungs-Eingangssignal (zum Beispiel der Erregerstrom) und die Geschwindigkeit der Schwingung (und damit entsprechend die Sensorspannung) in Phase sind. Ferner kann durch die Anregung in der Resonanzfrequenz ein wesentlicher, das Schwingungssystem beschreibender Parameter, nämlich die Resonanzfrequenz, unmittelbar ermittelt werden. Unter einer "im Wesentlichen" der Resonanzfrequenz entsprechenden Frequenz wird insbesondere verstanden, dass unter anderem kurzzeitige Signalmodulationen, die auch in einer Frequenzänderung bestehen können, möglich sind. Insbesondere können geringfügige Schwankungen der Frequenz durch die in dem Anregungs-Eingangssignal auftretenden, kurzzeitigen Signalmodulationen sowie auch durch einen Mediumwechsel oder durch in dem Medium mitgeführte Luftblasen, Partikel, etc., ausgelöst werden.

Gemäß einer Weiterbildung basiert das digitale Modell des angeregten Schwingungssystems auf einer, in einer digitalen Darstellung vorliegenden Transfergleichung und die digitale Darstellung der Transfergleichung weist zumindest die nachfolgende, aus einem Amplitudenmodell abgeleitete Gleichung $H_{sens}(z)$ als Bestandteil auf:

$$H_a(z) = \frac{A_{s1}^*(z)}{A_m(z)} = \frac{g(1-b)}{1-bz^{-1}}$$

wobei

$$g = \omega_r Q \lambda K_{exc} K_0 K_{sens}$$

ist,

$$\ln b = -\frac{\omega_r}{2Q}T$$

ist,

$A_m(z)$ eine dem digitalen Modell zugeführte Amplitude des Anregungs-Eingangssignals im z-Raum ist,
$A_{s1}^*(z)$ eine durch das digitale Modell aus $A_m(z)$ erhaltene Ausgangs-Amplitude im z-Raum ist,
A ein allgemeiner Skalierungsfaktor ist, und
T die Periode (Zeitdauer) der Abtastung (Sampling) ist.

Eine digitale Darstellung entspricht dabei einer Darstellung im z-Raum. Der z-Raum wird, wie allgemein in dem Fachgebiet bekannt ist, zur Beschreibung eines diskreten, in der Regel komplexen Signals im Frequenzraum herangezogen. Bei dem Amplitudenmodell gehen in die Transfergleichung bei der Anregungs-Eingangsgröße (des digitalen Modells) und bei der Simulations-Ansprechgröße (des digitalen Modells) jeweils nur deren jeweilige Amplitude, nicht aber deren Phase ein. Wie unterhalb noch im Detail erläutert wird, kann das digitale Amplitudenmodell dann angesetzt werden, wenn die Anregung mit der Resonanzfrequenz des jeweiligen Schwingungssystems erfolgt und dementsprechend die oberhalb erläuterte, vereinfachte Phasenbeziehung zwischen Anregungs-Eingangssignal und Ansprechgröße vorliegen. Auf diese Weise werden die erforderlichen Berechnungen zur Durchführung der Simulation erheblich vereinfacht.

Gemäß einer Weiterbildung basiert das digitale Modell des angeregten Schwingungssystems auf einer, in einer digitalen Darstellung vorliegenden Transfergleichung und die digitale Darstellung der Transfergleichung weist zumindest die nachfolgende Gleichung $H_{lp}(z)$ als Bestandteil auf. Dabei werden durch die Gleichung $H_{lp}(z)$ eine Verzögerung und eine Tiefpassfilterung, die bei der realen, digitalen Signalverarbeitung der Ansprechgröße auftreten, ausgedrückt:

$$H_{lp}(z) = \frac{a_{lp}.z^{-del}}{1-(1-a_{lp}).z^{-1}}$$

wobei
$a_{lp}$ und $_{del}$ Konstanten sind, die entsprechend der durchgeführten, realen digitalen Signalverarbeitung der Ansprechgröße anzupassen sind.

Gemäß einer Weiterbildung werden bei dem iterativen Annähern der Simulations-Ansprechgröße an die Ansprechgröße (vgl. Schritt C)) pro Iterations-Zeitintervall die zu mindestens zwei verschiedenen Zeitpunkten während des zugehörigen Iterations-Zeitintervalls vorliegenden Amplituden der Geschwindigkeit der Schwingung und der Geschwindigkeit der simulierten Schwingung als maßgebliche Vergleichsgrößen herangezogen (bzw. entsprechend auch die reale Sensorspannung und eine simulierte Sensorspannung möglich). Insbesondere sind dabei zu einem der beiden, verschiedenen Zeitpunkte die Amplituden der Geschwindigkeit der Schwingung und der Geschwindigkeit der simulierten Schwingung eingependelt (engl.: settled). Als eingependelt wird die Amplitude dann bezeichnet, wenn sie sich auf einen weitgehend konstanten Wert eingestellt hat. Insbesondere wird der mindestens eine, andere Zeitpunkt dadurch bestimmt, dass zumindest eine der Amplituden (des realen Schwingungssystems und/oder des digitalen Modells) zu dem betreffenden Zeitpunkt ein Minimum durchläuft. Insbesondere stimmen die Zeitpunkte, zu denen einerseits die Amplitudenermittlung in dem realen Schwingungssystem erfolgt, und die Zeitpunkte, zu denen andererseits die Amplitudenermittlung in dem digitalen Modell erfolgt, jeweils überein.

Gemäß einer Weiterbildung werden die anpassbaren Parameter des digitalen Modells durch die Steifheit $K_0$ und durch den Qualitätsfaktor Q oder durch zwei, aus der Steifheit $K_0$ und dem Qualitätsfaktor Q abgeleitete Größen gebildet. Der dritte, in der Regel zur Beschreibung eines Schwingungssystems und damit auch zur Bestimmung des digitalen Modells erforderliche Parameter ist die Resonanzfrequenz $\omega_r$. Erfolgt die Anregung aber, wie oberhalb beschrieben ist, mit der Resonanzfrequenz, so ergibt sich dieser Parameter unmittelbar aus der Anregungsfrequenz.

Die vorliegende Erfindung betrifft ferner ein Coriolis-Durchflussmessgerät, das in eine Rohrleitung einsetzbar ist, wobei das Coriolis-Durchflussmessgerät ein zu mechanischen Schwingungen anregbares Schwingungssystem mit mindestens einem, von Medium durchströmbaren Messrohr und eine Elektronik aufweist. Die Elektronik ist derart ausgebildet, dass durch diese mindestens ein Erreger des Coriolis-Durchflussmessgerätes ansteuerbar ist und dass durch diese ein Sensorsignal von mindestens einem Schwingungssensor auswertbar ist. Dabei sind die Elektronik, mindestens ein Erreger und mindestens ein Schwingungssensor derart ausgebildet,

- dass das Schwingungssystem durch den mindestens einen Erreger gemäß einem Anregungs-Eingangssignal, das in Zeitabständen auftretende, kurzzeitige Signalmodulationen aufweist, zu mechanischen Schwingungen anregbar ist,
- dass mindestens eine Ansprechgröße der hervorgerufenen, mechanischen Schwingungen des Schwingungssystems durch den mindestens einen Schwingungssensor erfassbar ist,
- dass durch die Elektronik das angeregte Schwingungssystem durch ein digitales Modell, das mindestens einen anpassbaren Parameter aufweist, simulierbar ist, wobei das Simulieren das Anregen des digitalen Modells in der gleichen Weise wie das Schwingungssystem, das Berechnen einer Simulations-Ansprechgröße der simulierten Schwingungen gemäß dem digitalen Modell und das über mehrere Signalmodulationen hinweg durchgeführte, iterative Anpassen des mindestens einen, anpassbaren Parameters derart, dass die Simulations-Ansprechgröße der Ansprechgröße iterativ angenähert wird, umfasst, und
- dass durch die Elektronik ermittelbar ist, ob durch den mindestens einen, iterativ ermittelten Parameterwert für den mindestens einen, anpassbaren Parameter oder durch mindestens eine, daraus abgeleitete Größe ein zugehöriger Grenzwert überschritten wird.

Durch das erfindungsgemäße Coriolis-Durchflussmessgerät werden im Wesentlichen die oberhalb, in Bezug auf das erfindungsgemäße Verfahren erläuterten Vorteile erzielt. Ferner sind bei dem erfindungsgemäßen Coriolis-Durchflussmessgerät im Wesentlichen die gleichen Weiterbildungen und Varianten, die in Bezug auf das erfindungsgemäße Verfahren erläutert werden, in entsprechender Weise möglich. In der Regel können die jeweiligen Schritte durch eine entsprechende Anpassung der Elektronik (und gegebenenfalls der damit verbundenen Komponenten) implementiert werden.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:

Fig. 1:  eine beispielhafte Darstellung eines Coriolis-Durchflussmessgerätes mit zwei Messrohren in Seitenansicht mit teilweise abgenommenem Gehäuse;

Fig. 2:  das Coriolis-Durchflussmessgerät aus Fig. 1 in perspektivischer Ansicht mit teilweise abgenommenem Gehäuse;

Fig. 3:  eine schematische Darstellung zur Veranschaulichung der Signalverarbeitung gemäß dem erfindungsgemäßen Verfahren;

Fig. 4:  eine schematische Darstellung zur Veranschaulichung der Signalverarbeitung gemäß einer ersten Ausführungsform des erfindungsgemäßen Verfahrens;

Fig. 5:  Bode-Diagramme zur Veranschaulichung der Amplitudenübertragung und der Phasenübertragung der Transfergleichung der ersten Ausführungsform;

Fig. 6:  eine schematische Darstellung zur Veranschaulichung der Signalverarbeitung gemäß einer zweiten Ausführungsform des erfindungsgemäßen Verfahrens;

Fig. 7: eine schematische Darstellung zur Veranschaulichung der kurzzeitigen Signalmodulationen und deren Auswirkungen bei dem realen Schwingungssystem;

Fig. 8: eine, der Fig. 7 entsprechende Darstellung, wobei zusätzlich der Verlauf der Amplitude des digitalen Modells dargestellt ist;

Fig. 9: eine schematische Darstellung zur Veranschaulichung der Konvergenz der Amplitude des digitalen Modells gegen die Amplitude des realen Schwingungssystems;

Fig. 10: eine schematische Darstellung zur Veranschaulichung der Konvergenz der Parameterwerte für die Parameter $Q^*$ und $K_0^*$ des digitalen Modells; und

Fig. 11: eine schematische Darstellung zur Veranschaulichung der Auswirkung der kurzzeitigen Signalmodulationen auf eine Massedurchflussmessung.

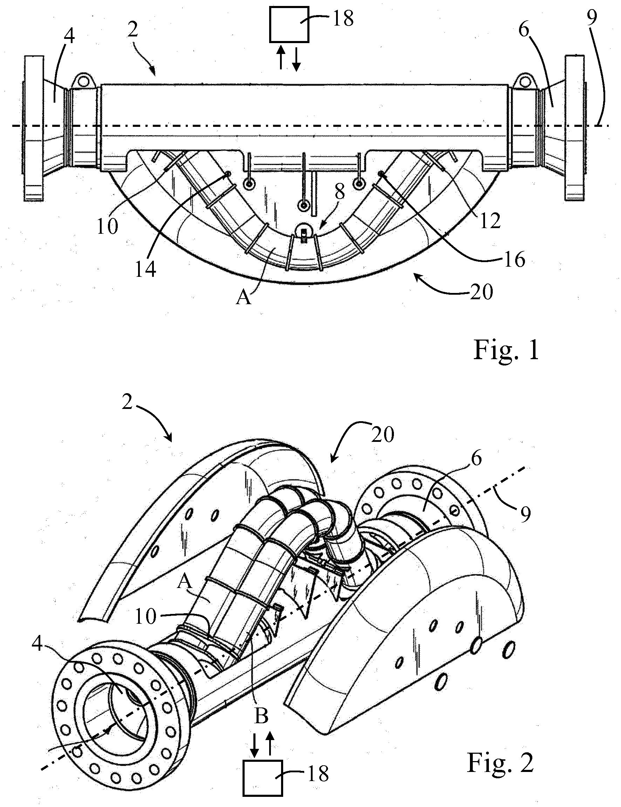

In den Figuren 1 und 2 ist beispielhaft ein Coriolis-Durchflussmessgerät 2 dargestellt, das zur Anwendung der vorliegenden Erfindung geeignet ist. Das Coriolis-Durchflussmessgerät 2 weist zwei schwingungsfähig gehaltene Messrohre A und B auf, die jeweils bogenförmig ausgebildet sind und parallel zueinander verlaufen. Das Coriolis-Durchflussmessgerät 2 ist dabei derart in eine (nicht dargestellte) Rohrleitung einsetzbar, dass die beiden Messrohre A und B von dem in der Rohrleitung strömenden Fluid durchströmt werden. Hierzu weist das Coriolis-Durchflussmessgerät 2 eingangsseitig einen Strömungsteiler 4 auf, durch den das Fluid auf die beiden Messrohre A und B aufgeteilt wird. Ausgangsseitig ist in entsprechender Weise ein Strömungsteiler 6 vorgesehen, durch den das aus den beiden Messrohren A und B austretende Fluid wieder zusammengeführt und zu einem Auslass des Coriolis-Durchflussmessgerätes 2 geleitet wird.

Zwischen den beiden Messrohren A und B erstreckt sich ein Erreger 8, der in dem vorliegenden Ausführungsbeispiel durch einen elektrodynamischen Erreger 8 gebildet wird. Der Erreger 8 ist bei dem vorliegenden Ausführungsbeispiel an einem Umkehrpunkt des Bogens, der jeweils durch die beiden Messrohre A und B gebildet wird, angeordnet. Der Erreger 8 ist derart ausgebildet, dass durch Zuführen eines Erregerstroms, der eine Anregungs-Eingangsgröße bildet, seine Länge verändert wird. Durch Zuführen eines entsprechenden, periodischen Erregerstroms an den Erreger 8 können die beiden Messrohre A und B periodisch auseinandergedrückt und/oder zusammengezogen werden, so dass sie Biegeschwingungen ausführen. Dabei werden die beiden Messrohre A und B gegenphasig zueinander angeregt und führen jeweils eine Schwenkbewegung um eine Längsachse 9 des Coriolis-Durchflussmessgerätes 2 aus. Die beiden Messrohre A und B sind ferner eingangsseitig und ausgangsseitig durch entsprechende Koppelelemente 10, 12 mechanisch aneinander gekoppelt.

Zwischen den beiden Messrohren A und B, jeweils an einem eingangsseitigen und an einem ausgangsseitigen Abschnitt derselben, erstrecken sich zwei Schwingungssensoren 14, 16, über deren Längenänderung mechanische Schwingungen der beiden Messrohre A und B erfassbar sind. In dem vorliegenden Ausführungsbeispiel ist durch die beiden Schwingungssensoren 14, 16 jeweils die Abstandsänderung pro Zeiteinheit zwischen den beiden Messrohren A, B, d.h. die Geschwindigkeit der Schwingung, vorliegend gemessen an der kombinierten Amplitude der Messrohre A und B, erfassbar. Die Schwingungs-Sensoren 14, 16 werden beispielsweise durch elektrodynamische Sensoren gebildet. Die Schwingungs-Sensoren 14, 16 geben in Abhängigkeit von der Geschwindigkeit der Schwingung jeweils eine Sensorspannung, die eine Ansprechgröße der hervorgerufenen Schwingungen bilden, aus. Für eine Messung des Massedurchflusses kann über die beiden Schwingungs-Sensoren 14, 16 unter anderem eine Phasenverschiebung der Schwingungen der Messrohre A, B entlang der Erstreckungsrichtung der beiden Messrohre A, B erfasst und daraus der Massedurchfluss berechnet werden.

Die Anregung des Erregers 8 durch Zuführen eines entsprechenden Erregerstromes sowie die Auswertung der von den Schwingungs-Sensoren 14, 16 bereitgestellten Sensorspannung (bzw. allgemein des Messsignals) erfolgt durch eine entsprechend ausgebildete Elektronik 18, die in den Figuren 1 und 2 lediglich schematisch durch eine Box dargestellt ist. Insbesondere ist die Elektronik 18 derart ausgebildet, dass durch diese eine Anregung des Schwingungssystems 20, das die beiden Messrohre A, B aufweist, derart steuerbar ist, dass das Schwingungssystem 20 auf einer Resonanzfrequenz des Grundmodus der Biegeschwingung angeregt wird. Eine derartige Regelung der Anregungsfrequenz kann beispielsweise anhand einer Auswertung mindestens eines Messsignals der Schwingungs-Sensoren 14, 16 erfolgen. Insbesondere kann solch eine Regelung derart erfolgen, dass das Anregungs-Eingangssignal und die, eine Geschwindigkeit der Schwingung repräsentierende und sensorisch erfasste Ansprechgröße in Phase sind, d.h. eine Phasenverschiebung von 0 aufweisen.

Nachfolgend wird zunächst die Herleitung eines digitalen Modells allgemein beschrieben. Anschließend werden im Rahmen eines Ausführungsbeispiels der Erfindung ein spezielles, digitales Modell und die Ermittlung der anpassbaren Parameter anhand desselben beschrieben.

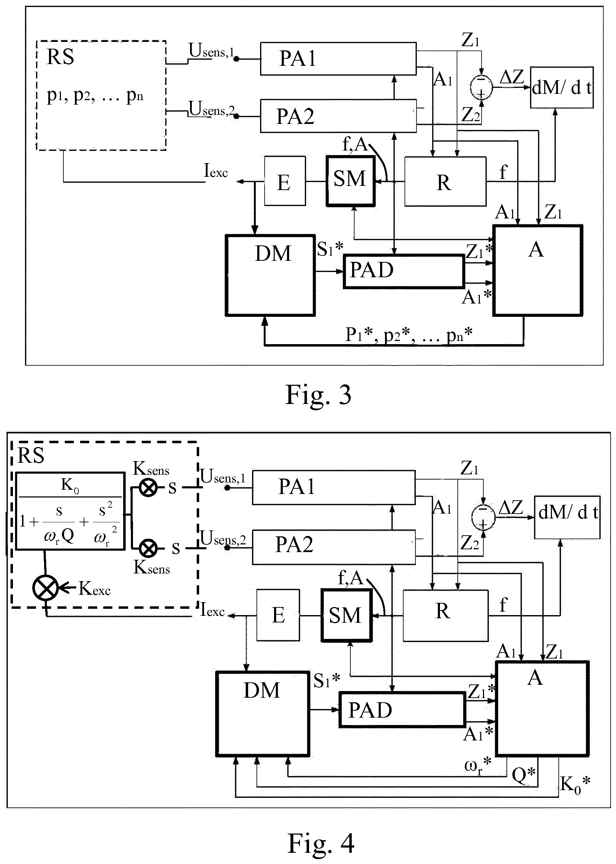

Die in Fig. 3 gezeigte, schematische Darstellung dient zur Veranschaulichung der, gemäß dem erfindungsgemäßen Verfahren durchgeführten Signalverarbeitung. Zunächst wird die allgemein in dem Fachgebiet bekannte, in einem Coriolis-Durchflussmessgerät durchgeführte Signalverarbeitung erläutert. Das Schwingungs-Ansprechverhalten des realen Schwingungssystems RS wird durch eine Mehrzahl von Parametern p1, p2, ... pn charakterisiert. Die Anregung des realen Schwingungssystems RS erfolgt gemäß dem Erregerstrom $I_{exc}$. Wie oberhalb erläutert wurde, sind in der Regel an einem Coriolis-Durchflussmessgerät zumindest zwei Schwingungssensoren vorgesehen, die entlang der Strömungsrichtung zueinander beabstandet sind. Die Signalpfade der von den beiden Schwingungssensoren ausgegebenen Sensorspannungen $U_{sens,1}$ und $U_{sens,2}$ sind in dem oberen Teil der Fig. 3 dargestellt. Diese zunächst analog vorliegenden Größen werden mit einer hohen Abtastrate (z.B. 40 kHz) abgetastet und digital verarbeitet. Durch diese Verarbeitung, die für den Signalpfad des ersten Sensors durch den Block PA1 und für den Signalpfad des zweiten Sensors durch den Block PA2 dargestellt ist, werden jeweils die Phase $Z_1$ und $Z_2$ der beiden Signale sowie zumindest die Amplitude von einem Signal $A_1$ (vorliegend von dem ersten Schwingungssensor) ermittelt. Aus den Phasen $Z_1$ und $Z_2$ der beiden Signale wird anschließend deren Phasendifferenz $\Delta Z$ ermittelt. Für die Ermittlung der Phasendifferenz $\Delta Z$ wird dabei die Datenrate erheblich, beispielsweise auf eine Datenrate von 50 Hz oder 100 Hz (Hz: Hertz) reduziert, was eine zeitliche Verzögerung des ausgegebenen Messwertes sowie ein Tiefpassverhalten mit sich bringt. Aus der Frequenz f der Schwingungen und der Phasendifferenz $\Delta Z$ wird der Massendurchfluss (Masse pro Zeiteinheit) berechnet, was in Fig. 3 schematisch durch den Block dM/dt dargestellt ist. Ferner werden aus der Amplitude $A_1$ und der Phase $Z_1$ von zumindest einem Signal (vorliegend von dem ersten Schwingungssensor) gemäß einem entsprechenden Regelalgorithmus eine Frequenz und eine Amplitude für die Anregung des Schwingungssystems ermittelt, was in Fig. 3 schematisch durch den Block R dargestellt ist. Entsprechend dieser Vorgaben wird dann ein entsprechender Erregerstrom $I_{exc}$ bestimmt, was schematisch durch den Block E dargestellt ist.

Zusätzlich zu der oberhalb erläuterten, in dem Fachgebiet bekannten Signalverarbeitung ist gemäß der Erfindung vorgesehen, dass in das Anregungs-Eingangssignal (vorliegend: in den Erregerstrom $I_{exc}$) in Zeitabständen auftretende, kurzzeitige Signalmodulationen eingebracht werden, was in Fig. 3 schematisch durch den Block SM dargestellt ist. Ferner wird das Anregungs-Eingangssignal (vorliegend der Erregerstrom $I_{exc}$) nicht nur dem realen Schwingungssystem RS sondern auch dem, gemäß der vorliegenden Erfindung vorgesehenen, digitalen Modell, das in Fig. 3 durch den Block DM dargestellt ist, zugeführt. Der Ausgang $S_1^*$ des digitalen Modells DM wird in dem Block PAD exakt in der gleichen Weise wie der Ausgang $U_{sens,1}$ des realen Schwingungssystems RS (vorliegend des ersten Schwingungssensors) bearbeitet (demoduliert) und dessen Amplitude $A_1^*$ und dessen Phase $Z_1^*$ermittelt. Die erhaltenen Signale (A1, Z1) des realen Schwingungssystems RS sowie die Signale (A1*, Z1*) des digitalen Modells DM werden dann verwendet, um anpassbare Parameter $p_1^*$, $p_2^*$, ...$p_n^*$, die das digitale Modell DM charakterisieren, derart anzupassen, dass die Signale ($A_1^*$, $Z_1^*$) des digitalen Modells DM gegen die entsprechenden Signale ($A_1$, $Z_1$) des realen Schwingungssystems RS konvergieren. Diese Anpassung, die in Fig. 3 schematisch durch den Block A dargestellt ist, erfolgt iterativ (gemäß einem entsprechenden Anpassungs-Algorithmus), wobei bei jeder Iteration die entsprechend angepassten Parameter $p_1^*$, $p_2^*$, ...$p_n^*$ dem digitalen Modell DM zugeführt werden, um bei der nächsten Iteration der Verarbeitung des Erregerstroms $I_{exc}$ zur Erzeugung des Ausgangs $S_1^*$ verwendet zu werden. Im Rahmen dieser iterativen Anpassung werden, wie bereits oberhalb beschrieben ist, geeignete Anpassungs-Algorithmen (z.B. LMS, RLS, etc.) angewendet, durch welche die anpassbaren Parameter $p_1^*$, $p_2^*$, ...$p_n^*$ bei jeder Iteration derart geändert werden, dass die Signale ($A_1^*$, $Z_1^*$) des digitalen Modells DM gegen die entsprechenden Signale ($A_1$, $Z_1$) des realen Schwingungssystems RS konvergieren. Die Überprüfung, ob eine ausreichende Konvergenz vorliegt, kann insbesondere mittels einer Cost Function (deutsch: Zielfunktion) bestimmt werden, deren Funktionswert die zu minimierende Größe angibt (z.B. Betrag des Abstandes oder quadratischer Abstand, etc., der Simulations-Ansprechgröße, insbesondere der Signale ($A_1^*$, $Z_1^*$), gegenüber der Ansprechgröße, insbesondere der Signale ($A_1$, $Z_1$)). Sind die Signale konvergiert, so wird aus den iterativ ermittelten Parameterwerten der anpassbaren Parameter $p_1^*$, $p_2^*$, ... $p_n^*$ des digitalen Modells ermittelt, ob diese noch innerhalb eines zulässigen Bereichs liegen.

Wie aus dem Fachgebiet der Systemtheorie bekannt ist, bestehen unterschiedliche Möglichkeiten für den Anpassungs-Algorithmus, gemäß welchem die anpassbaren Parameter $p_1^*$, $p_2^*$, ...$p_n^*$ des digitalen Modells iterativ angepasst werden. Ferner bestehen auch unterschiedliche Möglichkeiten, wie das digitale Modell mathematisch beschrieben wird.

Nachfolgend wird eine erste Ausführungsform der vorliegenden Erfindung erläutert. Es wird dabei aus einer Transferfunktion, die üblicherweise in dem Fachgebiet der Durchflussmessung zur Beschreibung des realen Schwingungssystems eines Coriolis-Durchflussmessgerätes herangezogen wird, ein entsprechendes, digitales Modell hergeleitet, anhand dessen im Rahmen von Simulationen die oberhalb beschriebenen Berechnungen durchführbar sind. Die verwendete Transfergleichung basiert dabei auf einem Resonatormodell mit einem Freiheitsgrad, das bis zur zweiten Ordnung angesetzt wird. Die Transfergleichung H(s) im s-Raum (s: Laplace-Index, der im harmonischen Fall insbesondere $j\omega$ entspricht) ist in der Gleichung (2) wiedergegeben, wobei bezüglich der darin auftretenden Variablen auf die Definitionen oberhalb verwiesen wird. Dabei werden bei der nachfolgenden Herleitung die Parameter $K_0$, $\omega_r$ und Q des realen Schwingungssystems eingesetzt, welche den anpassbaren Parametern $K_0^*$, $w_r^*$ und $Q^*$ des digitalen Modells entsprechen. Dementsprechend können nach Herleitung des digitalen Modells die Parameter $K_0$, $\omega_r$ und Q durch die Parameter $K_0^*$, $w_r^*$ und $Q^*$ ersetzt werden und die Anpassung derselben kann iterativ im Rahmen der Simulation erfolgen, um so die tatsächlichen Parameterwerte der Parameter $K_0$, $\omega_r$ und Q des realen Schwingungssystems zu ermitteln.

$$(2) \qquad H(s) = \frac{U_{sens}(s)}{I_{exc}(s)} = \frac{K_{exc}K_0 K_{sens}\, s}{1 + \dfrac{s}{\omega_r Q} + \dfrac{s^2}{\omega_r^{\,2}}}$$

$$\frac{K_0}{1 + \dfrac{s}{\omega_r Q} + \dfrac{s^2}{\omega_r^{\,2}}}$$

Dabei wird durch den Teil $\dfrac{K_0}{1 + \frac{s}{\omega_r Q} + \frac{s^2}{\omega_r^{\,2}}}$ das Verhältnis der Auslenkung des Schwingungssystems zu der Erregerkraft $F_{exc}$ angegeben, wobei das Produkt aus Auslenkung des Schwingungssystems und der Variablen s wiederum die Geschwindigkeit $V_1$ der Schwingung des Schwingungssystems ergibt (im s-Raum). Fig. 4 ist eine, die erste Ausführungsform repräsentierende Signaldarstellung, die weitgehend der in Fig. 3 gezeigten Darstellung entspricht. Dementsprechend werden wiederum die gleichen Bezugszeichen verwendet und es wird lediglich auf die Unterschiede gegenüber der Fig. 3 eingegangen. In Fig.4 ist insbesondere zusätzlich die Konkretisierung hinsichtlich der Transfergleichung H(s) gemäß der ersten Aufführungsform in dem realen Sensor RS wiedergegeben. Wie aus der Transfergleichung H(s) hervorgeht, sind die den realen Sensor RS charakterisierenden (realen) Parameter $p_1$, $p_2$, ... $p_n$ die Steifheit $K_0$, die Resonanzfrequenz $\omega_r$ und der Qualitätsfaktor Q. Entsprechend werden gemäß der ersten Ausführungsform auch als anpassbare Parameter $p_1^*$, $p_2^*$, ... $p_n^*$ des digitalen Modells DM eine Steifheit $K_0^*$, eine Resonanzfrequenz $\omega_r^*$ und ein Qualitätsfaktor $Q^*$, die entsprechend den realen Parametern definiert sind, gewählt.

Aus dieser Transfergleichung kann, wie in dem Fachgebiet der Systemtheorie bekannt ist, mittels einer Frequenz-Vorverzerrung, die in der Beziehung (3) angegeben ist, und mittels einer bilinearen Transformation, die in der Beziehung (4) angegeben ist, ein digitales Modell im z-Raum abgeleitet werden. Dabei wird mit $F_s$ in den Beziehungen (3) und (4) die Abtastfrequenz bezeichnet.

$$(3) \qquad \omega_r \rightarrow 2F_s \tan \frac{\omega_r}{2F_s}$$

$$(4) \qquad s \rightarrow 2F_s \frac{1 - z^{-1}}{1 + z^{-1}}$$

Das hierdurch erhaltene, digitale Modell H(z), welches durch die Transfergleichung im z-Raum gebildet wird, weist die in Gleichung (5) wiedergegebene Form auf:

$$(5) \qquad H(z) = \frac{K_z (1 + z^{-1})^2}{p_z + 2q_z z^{-1} + r_z z^{-2}}$$

wobei die nachfolgenden Beziehungen (6) - (12) gelten:

$$(6) \qquad K_z = K_0 K_{exc} K_{sens}$$

$$(7) \qquad p_z = 1 + \frac{c_z}{a_z b_z} + \frac{c_z^2}{b_z^{\,2}}$$

$$(8) \qquad q_z = 1 - \frac{c_z^2}{b_z^{\,2}}$$

$$(9) \qquad r_z = 1 - \frac{c_z}{a_z b_z} + \frac{c_z^2}{b_z^2}$$

$$(10) \qquad a_z = Q$$

$$(11) \qquad b_z = 2F_s \tan(\frac{\omega_r}{2F_s})$$

$$(12) \qquad c_z = 2F_s$$

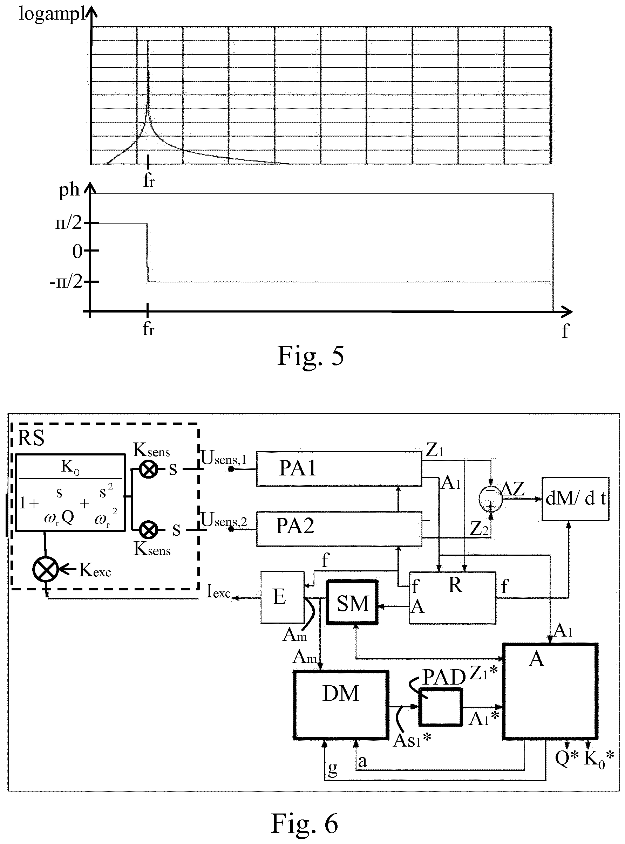

Eine in dem Fachgebiet gängige Darstellung der Phasenübertragung und der Amplitudenübertragung der Transfergleichung H(s) im s-Raum bzw. der Transfergleichung H(z) im z-Raum sind die Bode-Diagramme, die in Fig. 5 dargestellt sind. Dabei ist in dem oberen Diagramm der Fig. 5 der Logarithmus der Amplitude der Sensorspannung $U_{sens}$ (und damit entsprechend der Geschwindigkeit $V_1$ der Schwingung) über der Frequenz f aufgetragen. Die beiden Achsen sind in dem oberen Diagramm nicht skaliert, da lediglich schematisch der Verlauf veranschaulicht werden soll. Wie ersichtlich ist, weist der Verlauf des Graphen bei der Resonanzfrequenz $f_r$ ein Maximum auf. In dem unteren Diagramm der Fig. 5 ist die Phasenverschiebung der Sensorspannung $U_{sens}$ (und damit entsprechend der Geschwindigkeit $V_1$ der Schwingung) relativ zu dem Erregerstrom $I_{exc}$ in Radiant über der Frequenz aufgetragen, wobei die Frequenzachse wiederum nicht skaliert ist. Wie ersichtlich ist, beträgt die Phasenverschiebung für Frequenzen, die kleiner als die Resonanzfrequenz $f_r$ sind, 0,5 n, bei der Resonanzfrequenz $f_r$ beträgt sie 0 (d.h. in Phase) und bei Frequenzen, die größer als die Resonanzfrequenz sind, beträgt sie -0,5 n.

Grundsätzlich können basierend auf der Transfergleichung H(z) im z-Raum gemäß Gleichung (5) im Rahmen von Simulationen die anpassbaren Parameter $K_0^*$, $w_r^*$ und $Q^*$, die jeweils für die oberhalb in den Gleichungen (5) bis (12) angegebenen Parameter $K_0$, $\omega_r$ und Q in die Gleichungen (5) bis (12) eingesetzt werden, derart iterativ angepasst werden, dass die Signale $(A_1^*, Z_1^*)$ des digitalen Modells DM gegen die entsprechenden Signale $(A_1, Z_1)$ des realen Schwingungssystems RS konvergieren. Die für die anpassbaren Parameter $K_0^*$, $\omega_r^*$ und $Q^*$ des digitalen Modells erhaltenen Werte entsprechen dann den zugehörigen, tatsächlich vorliegenden Parametern $K_0$, $\omega_r$ und Q des realen Schwingungssystems. Die Durchführung der hierfür erforderlichen Berechnungen ist relativ aufwändig und erfordert eine Berechnung bei einer hohen Rate, was eine relativ hohe Prozessorleistung voraussetzt.

Nachfolgend wird eine zweite Ausführungsform erläutert, bei welcher ausgehend von der Transfergleichung H(s) gemäß Gleichung (2) vereinfachende Randbedingungen und Näherungen vorgenommen werden. Dadurch werden die im Rahmen der Simulation durchzuführenden Berechnungen vereinfacht und die Rate der Berechnungen kann reduziert werden, so dass eine geringere Prozessorleistung erforderlich ist. Dabei werden bei der nachfolgenden Herleitung wiederum die Parameter $K_0$, $\omega_r$ und Q des realen Schwingungssystems eingesetzt, welche den anpassbaren Parametern $K_0^*$, $\omega_r^*$ und $Q^*$ des digitalen Modells entsprechen. Dementsprechend können nach Herleitung des digitalen Modells die Parameter $K_0$, $\omega_r$ und Q durch die Parameter $K_0^*$, $w_r^*$ und $Q^*$ ersetzt werden und die Anpassung derselben kann iterativ im Rahmen der Simulation erfolgen, um so die tatsächlichen Parameterwerte der Parameter $K_0$, $\omega_r$ und Q des realen Schwingungssystems zu ermitteln.

Bei der zweiten Ausführungsform wird zum Einen vorausgesetzt, dass das Schwingungssystem konstant in der Resonanzfrequenz $\omega_r$ schwingt. Wie in dem Fachgebiet bekannt ist, ist dies bei der Durchführung einer Durchflussmessung (beispielsweise zur Bestimmung des Massedurchflusses, einer Dichte, und/oder einer Viskosität) üblich und es ist ein entsprechender Regelalgorithmus in dem Coriolis-Durchflussmessgerät vorgesehen, durch welchen die Einstellung der Anregung des Schwingungssystems auf die Resonanzfrequenz erfolgt. Dementsprechend ergibt sich die Resonanzfrequenz $\omega_r$ (und damit auch der entsprechende Parameter $\omega_r^*$ des digitalen Modells) direkt aus der Frequenz der Anregung (z.B. des Erregerstroms $I_{exc}$) bzw. aus der Frequenz der gleichphasig zu der Anregung verlaufenden Sensorspannung $U_{sens}$ (bzw. der Geschwindigkeit $V_1$ der Schwingung). Insbesondere kann der zeitliche Mittelwert dieser Frequenz als Resonanzfrequenz $\omega_r$ herangezogen werden, so dass kurzzeitige, geringfügige Schwankungen unberücksichtigt gelassen werden. Zusätzlich kann ein Algorithmus in der Elektronik implementiert sein, durch welchen überwacht wird, ob kurzzeitige, relativ hohe Frequenzänderungen auftreten, die beispielsweise durch in dem Medium mitgeführte Festkörper, durch in dem Medium mitgeführte Luftblasen, etc., ausgelöst werden können. Bei Auftreten solcher kurzzeitigen, hohen Frequenzänderungen kann insbesondere die Durchführung des erfindungsgemäßen Verfahrens vorübergehend unterbrochen werden. Dementsprechend müssen gemäß der zweiten Ausführungsform lediglich der Qualitätsfaktor Q und die Steifheit $K_0$ des realen Schwingungssystems durch Simulationen ermittelt werden.

Eine weitere, bei Anregung des Schwingungssystems in dessen Resonanzfrequenz $\omega_r$ mögliche Vereinfachung

ergibt sich daraus, dass der zeitabhängige Erregerstrom $I_{exc}$(t) und die zeitabhängige Sensorspannung $U_{sens}$(t) (und dementsprechend die Geschwindigkeit der Schwingung $V_1$(t)) in Phase sind. Dementsprechend kann, wie im Folgenden dargelegt wird, ein vereinfachtes, digitales Modell aus einem Amplitudenmodell, in welches lediglich die (zeitabhängigen) Amplituden unter Vernachlässigung der Phase der betreffenden Größen (insbesondere des Erregerstroms $I_{exc}$(t) und der Sensorspannung $U_{sens}$(t)) eingehen, abgeleitet werden. Ferner kann, wie nachfolgend dargelegt wird, die Ermittlung der Phase und der Amplitude des durch das digitale Modell erhaltenen Ausgangs (Demodulation), was in den Figuren 3 und 4 schematisch durch den Block PAD dargestellt ist, einfach durch einen Tiefpassfilter mit einer vorbestimmten Verzögerung beschrieben werden. Auf diese Weise wird eine Berechnung bei einer deutlich niedrigeren Rate ermöglicht.

Im Folgenden wird gezeigt, dass das Amplitudenmodell bei Anregung in der Resonanzfrequenz $\omega_r$ angesetzt werden kann. Das Anregungs-Eingangssignal wird im Rahmen dieser zweiten Ausführungsform durch den zeitabhängigen Erregerstrom $I_{exc}$(t), der durch eine Sinusschwingung mit variabler Amplitude $A_a$(t) ($A_a$(t): reellwertig) beschrieben wird, gebildet, wie aus nachfolgender Gleichung (13) hervorgeht:

$$(13) \qquad I_{exc}(t) = A_a(t)e^{j\omega t} \text{ mit } \omega \approx \omega_r$$

Die Ansprechgröße, die bei der zweiten Ausführungsform durch die zeitabhängige Sensorspannung $U_{sens}$(t) gebildet wird, kann - da sie in Phase mit dem Erregerstrom $I_{exc}$(t) ist - durch eine zu dem Erregerstrom $I_{exc}$(t) phasengleiche Sinusschwingung mit variabler Amplitude $B_a$(t) ($B_a$(t): reellwertig) beschrieben werden, wie in Gleichung (14) angegeben ist:

$$(14) \qquad U_{sens}(t) = B_a(t)e^{j\omega t} \text{ mit } \omega \approx \omega_r$$

Die Transfergleichung H(s) im s-Raum gemäß Gleichung (2) kann in nachfolgende Gleichung (15) umgeformt werden:

$$(15) \qquad (1 + \frac{s}{\omega_r Q} + \frac{s^2}{\omega_r^2})U_{sens}(s) = K_{exc}K_0K_{sens}sI_{exc}(s)$$

Eine Multiplikation mit s im s-Raum entspricht bei einem eingeschwungenen System (von solch einem harmonischen Fall wird vorliegend ausgegangen) im Zeitraum einer Ableitung nach der Zeit. Dementsprechend entspricht Gleichung (15) im Zeitraum der nachfolgenden Differentialgleichung (16), wobei mit einem Punkt über einer Variablen jeweils die Ableitung derselben nach der Zeit dargestellt wird.

$$(16) \qquad (U_{sens}(t) + \frac{\dot{U}_{sens}(t)}{\omega_r Q} + \frac{\ddot{U}_{sens}(t)}{\omega_r^2}) = K_{exc}K_0K_{sens}\dot{I}_{exc}(t)$$

Zur Erzielung einer übersichtlicheren Darstellung wird vorübergehend das Produkt aus $K_{exc}$, $K_0$ und $K_{sens}$ gleich 1 angesetzt, so dass sich die Gleichung (17) ergibt. Weiter unterhalb werden diese Größen wieder eingeführt, wobei die zugrundeliegenden Umformungen mathematisch korrekt sind und die vorübergehende Weglassung nur zur Erzielung einer übersichtlicheren Darstellung erfolgt.

$$(17) \qquad (U_{sens}(t) + \frac{\dot{U}_{sens}(t)}{\omega_r Q} + \frac{\ddot{U}_{sens}(t)}{\omega_r^2}) = \dot{I}_{exc}(t)$$

Für die zeitlichen Ableitungen $\dot{I}_{exc}$(t), $\dot{U}_{sens}$(t) und $\ddot{U}_{sens}$(t) werden die, in den Gleichungen (18), (19) bzw. (20) angegebenen Beziehungen eingesetzt, die sich aus der zeitlichen Ableitung der Gleichungen (13) bzw. (14) ergeben:

$$(18) \qquad \dot{I}_{exc}(t) = \dot{A}_a(t)e^{j\omega t} + j\omega A_a(t)e^{j\omega t}$$

$$(19) \qquad \dot{U}_{sens}(t) = \dot{B}_a(t)e^{j\omega t} + j\omega B_a(t)e^{j\omega t}$$

$$(20) \qquad \ddot{U}_{sens}(t) = \ddot{B}_a(t)e^{j\omega t} + 2j\omega\dot{B}_a(t)e^{j\omega t} - B_a(t)\omega^2 e^{j\omega t}$$

Werden die Beziehungen (18), (19) und (20) in die Gleichung (17) eingesetzt und der Term $e^{j\omega t}$ gekürzt, so wird nachfolgende Gleichung (21) erhalten:

$$(21) \qquad B_a(t) + \frac{\dot{B}_a(t) + j\omega B_a(t)}{\omega_r Q} + \frac{\ddot{B}_a(t) + 2j\omega\dot{B}_a(t) - B_a(t)\omega^2}{\omega_r^2} = \dot{A}_a(t) + j\omega A_a(t)$$

Eine Zusammenfassung der imaginären und der reellen Terme in Gleichung (21) ergibt die nachfolgende Gleichung (22):

$$(22) \qquad B_a(t) + \frac{\dot{B}_a(t)}{\omega_r Q} + \frac{\ddot{B}_a(t) - B_a(t)\omega^2}{\omega_r^2} + j\omega\left(\frac{B_a(t)}{\omega_r Q} + \frac{2\dot{B}_a(t)}{\omega_r^2}\right) = \dot{A}_a(t) + j\omega A_a(t)$$

Ein Vergleich der imaginären Terme der Gleichung (22) ergibt die nachfolgende Gleichung (23):

$$(23) \qquad \frac{B_a(t)}{\omega_r Q} + \frac{2\dot{B}_a(t)}{\omega_r^2} = A_a(t)$$

Die erhaltene Gleichung (23) im Zeitraum wird in eine Gleichung (24) in dem s-Raum umgewandelt, wobei wiederum eine Ableitung nach der Zeit in dem Zeitraum einer Multiplikation mit s in dem s-Raum entspricht (auch hier wird wieder von dem harmonischen Fall eines eingeschwungenen Schwingungssystems ausgegangen):

$$(24) \qquad \frac{B_a(s)}{\omega_r Q} + \frac{2sB_a(s)}{\omega_r^2} = \left(\frac{1}{\omega_r Q} + \frac{2s}{\omega_r^2}\right)B_a(s) = A_a(s)$$

Ausgehend von der Gleichung (24) kann eine, auf den Amplituden basierende Transfergleichung $H_a(s)$ im s-Raum angesetzt werden, wie in der nachfolgenden Gleichung (25) angegeben ist:

$$(25) \qquad H_a(s) = \frac{B_a(s)}{A_a(s)} = \frac{\dfrac{\omega_r^2}{2}}{\dfrac{\omega_r}{2Q} + s}$$

Bei der zweiten Ausführungsform werden die kurzzeitigen Signalmodulationen jeweils durch eine kurzzeitige Amplitudenänderung des Erregerstroms (bzw. allgemein des Anregungs-Eingangssignals) gebildet. Insbesondere besteht diese kurzzeitige Amplitudenänderung bei der zweiten Ausführungsform in einer kurzzeitigen Reduzierung der Amplitude auf die Hälfte, bevor sie dann wieder auf den normalen Wert angehoben wird. Bei der Ermittlung der digitalen Darstellung der auf den Amplituden basierenden Transfergleichung $H_a(s)$ wird angesichts dieser Art von Signalmodulation der Schwerpunkt besonders darauf gelegt, dass die Sprungantwort auf solche Amplitudenänderungen korrekt wiedergegeben wird. Dabei gilt allgemein, dass eine allgemeine Transferfunktion $H_{allg}(s)$ erster Ordnung der in Gleichung (26) angegebenen Form (im s-Raum) eine Sprungantwort $B_{allg}(t)$ der in Gleichung (27) angegebenen Form (im Zeitraum) aufweist, wobei $a_{allg}$ und $b_{allg}$ jeweils Konstanten sind (diese Beziehung ist in dem Fachgebiet allgemein bekannt). Durch Vergleich der allgemeinen Transferfunktion $H_{allg}(s)$ gemäß Gleichung (26) mit der auf den Amplituden basierenden Transfergleichung $H_a(s)$ gemäß Gleichung (25) ergeben sich für $a_{allg}$ die in Gleichung (28) angegebene Beziehung, für

$b_{allg}$ die in Gleichung (29) angegebene Beziehung und dementsprechend für die Sprungantwort $B_{allg}(t)$ die in Gleichung (30) angegebene Beziehung.

$$(26) \qquad H_{al\lg}(s) = \frac{a_{al\lg}}{b_{al\lg} + s}$$

$$(27) \qquad B_{al\lg}(t) = \frac{a_{al\lg}}{b_{al\lg}}(1 - e^{-b_{al\lg}t})$$

$$(28) \qquad a_{al\lg} = \frac{\omega_r^2}{2}$$

$$(29) \qquad b_{al\lg} = \frac{\omega_r}{2Q}$$

$$(30) \qquad B_{al\lg}(t) = \omega_r Q(1 - e^{-\frac{t\omega_r}{2Q}})$$

Auf der anderen Seite gilt im z-Raum, dass ein digitaler Filter $H_a(z)$ der in Gleichung (31) angegebenen Form (im z-Raum) eine zu Gleichung (30) vergleichbare Sprungantwort aufweist, wobei die Sprungantwort $N_a(t)$ des digitalen Filters $H_a(z)$ in Gleichung (32) angegeben ist (diese Beziehung ist in dem Fachgebiet bekannt). Dabei bilden g und b Konstanten.

$$(31) \qquad H_a(z) = g\frac{(1-b)}{1-bz^{-1}}$$

$$(32) \qquad N_a(t) = g(1 - e^{\frac{\ln b}{T}t})$$

Aufgrund der vergleichbaren Sprungantworten $B_{allg}(t)$ und $N_a(t)$ kann dementsprechend die in Gleichung (25) dargestellte Transfergleichung $H_a(s)$ durch den in Gleichung (31) angegebenen, digitalen Filter $H_a(z)$ beschrieben werden. Die zusätzlich vorzunehmenden Anpassungen aufgrund einer, bei der realen Signalverarbeitung auftretenden zeitlichen Verzögerung und Tiefpassfilterung (bei der Demodulation) werden noch zusätzlich berücksichtigt, wie unterhalb beschrieben wird. Durch Vergleich der Sprungantworten $B_{allg}(t)$ (gemäß Gleichung (30)) und $N_a(t)$ (gemäß Gleichung (32)) können die Konstanten g und b ermittelt werden. Daraus ergibt sich für die digitale Darstellung $H_a(z)$ der in Gleichung (25) dargestellten Transfergleichung $H_a(s)$ die in Gleichung (33) angegebene Beziehung (rekursive Struktur erster Ordnung), wobei mit T die Periode der Abtastung bezeichnet wird:

$$(33) \qquad H_a(z) = g\frac{(1-b)}{1-bz^{-1}}, \text{ wobei } g = \omega_r Q \text{ und } \ln b = -\frac{\omega_r}{2Q}T$$

Werden zusätzlich die oberhalb nach Gleichung (16) vorübergehend vernachlässigten Konstanten $K_{exc}$, $K_0$ und $K_{sens}$ und ein zusätzlicher Skalierungsfaktor A wiedereingeführt, so ergibt sich für den Faktor g aus Gleichung (33) die nachfolgende Beziehung gemäß Gleichung (34):

$$(34) \qquad g = \omega_r Q\lambda K_{exc}K_0 K_{sens}$$

Dabei ist zu berücksichtigen, dass der Betrag von lnb relativ klein ist (vgl. Gleichung (33)), da Q in der Regel > 100 ist und T relativ klein ist. Dementsprechend kann b durch 1-a näherungsweise ausgedrückt werden, wobei 0<a<<1 gilt und ferner kann die Näherung lnb=-a angesetzt werden. Mit diesen Näherungen ergibt sich nachfolgende Beziehung gemäß Gleichung (35):

$$(35) \qquad H_a(z) = \frac{A_{s1}^*(z)}{A_m(z)} = \frac{ga}{1-(1-a)z^{-1}} \, ,$$

wobei

$$g = \omega_r Q \lambda K_{exc} K_0 K_{sens} \text{ und } a = \frac{\omega_r}{2Q}T$$

In Gleichung (35) wird mit $A_{s1}^*$ die aus dem digitalen Modell ausgehende Ausgangs-Amplitude bezeichnet und mit $A_m$ die Amplitude des Erregerstroms $I_{exc}$, die dem digitalen Modell zugeführt wird, bezeichnet. Wie nachfolgend noch im Detail erläutert wird, können die Parameter g und a als anpassbare Parameter des digitalen Modells iterativ im Rahmen der gemäß Schritt C) durchgeführten Simulation iterativ angepasst werden, bis das System konvergiert. Aus a kann dann der Parameterwert des Parameters $Q^*$ und anschließend aus g der Parameterwert des Parameters $K_0^*$ ermittelt werden, wobei durch Angabe des Sterns bezeichnet wird, dass es sich dabei um die anpassbaren Parameter des digitalen Modells handelt. Da diese den realen Parametern Q und $K_0$ des realen Schwingungssystems entsprechen, können sie in den betreffenden Gleichungen unmittelbar gegeneinander ausgetauscht werden.

In Fig. 6 ist die Signalverarbeitung gemäß der zweiten Ausführungsform schematisch dargestellt. Es werden nachfolgend die Unterschiede zu der ersten Ausführungsform erläutert. Wiederum werden in dem Block R aus der Amplitude $A_1$ und der Phase $Z_1$ von zumindest einem Signal (vorliegend von dem ersten Schwingungssensor) gemäß einem entsprechenden Regelalgorithmus eine Frequenz f und eine Amplitude A für die Anregung des Schwingungssystems ermittelt. Die ermittelte Frequenz f wird direkt dem Block E zugeführt, innerhalb welchem ein entsprechender Erregerstrom $I_{exc}$ generiert wird. Lediglich die ermittelte Amplitude A wird dem Block SM zugeführt, innerhalb welchem kurzzeitige Änderungen der Amplitude (vorliegend eine kurzzeitige Reduzierung auf die Hälfte des üblichen Wertes) vorgenommen werden. Das daraus erhaltene Amplitudensignal $A_m$ des Erregerstroms $I_{exc}$, welches der Amplitude des tatsächlichen Erregerstroms $I_{exc}$ in der Regel entspricht, wird nicht nur dem Block E zum Generieren eines Erregerstroms $I_{exc}$ zugeführt, sondern auch dem digitalen Modell DM. Die aus dem digitalen Modell ausgehende Ausgangs-Amplitude $A_{s1}^*$ wird in dem Block PAD entsprechend wie der Ausgang $U_{sens,1}$ des realen Schwingungssystems RS (vorliegend des ersten Schwingungssensors) bearbeitet (demoduliert), wobei vorliegend lediglich dessen Amplitude $A_1^*$ ermittelt wird. Bei der Demodulation in dem Block PAD ergibt sich bei der zweiten Ausführungsform eine Vereinfachung, nämlich dass die in der realen Signalverarbeitung durchgeführte Demodulation - wenn sie ausschließlich bezüglich der Amplitude durchgeführt wird - einfach durch eine Verzögerung und eine Tiefpasscharakteristik dargestellt werden kann. Dieser zusätzliche Teil der Gesamt-Transferfunktion, welcher die digitale Signalverarbeitung beschreibt, wird unterhalb hergeleitet. Die aus dem Block PAD (d.h. nach der Demodulation) ausgehende Größe wird durch die demodulierte Amplitude $A_1^*$ gebildet. Die Amplitude $A_1$ des realen Schwingungssystems sowie die demodulierte Amplitude $A_1^*$ des digitalen Modells werden dann verwendet, um die anpassbaren Parameter a, g, die das digitale Modell DM charakterisieren, derart anzupassen, dass die Amplitude $A_1^*$ des digitalen Modells gegen die Amplitude $A_1$ des realen Schwingungssys- tems konvergiert. Diese Anpassung, die in Fig. 6 schematisch durch den Block A dargestellt ist, erfolgt iterativ. Dabei werden bei jeder Iteration die entsprechend angepassten Parameter a, g dem digitalen Modell DM zugeführt, um bei der nächsten Iteration der Verarbeitung des Amplitudensignals $A_m$, welches dem digitalen Modell DM zugeführt wird, zur Erzeugung der aus dem digitalen Modell ausgehenden Ausgangs-Amplitude $A_{s1}^*$ verwendet zu werden. Ein Beispiel solch einer iterativen Anpassung wird unterhalb beschrieben. Bei jeder Iteration a, g sind aus den Werten der Parameter a, g auch entsprechende Werte für den Qualitätsfaktor $Q^*$ und die Steifheit $K_0^*$ des digitalen Modells DM ermittelbar, wie in Fig. 6 schematisch durch die zwei weiteren Ausgänge aus dem Block A dargestellt ist. Ist das System konvergiert, so entsprechen die Werte für den Qualitätsfaktor $Q^*$ und die Steifheit $K_0^*$ des digitalen Modells DM den Werten des Qualitätsfaktors Q und der Steifheit $K_0$ des realen Schwingungssystems.

Nachfolgend wird eine digitale Darstellung $H_{lp}(z)$ hergeleitet, durch welche die bei der Demodulation im Rahmen der realen Signalverarbeitung auftretende Verzögerung und Tiefpasscharakteristik beschreibbar ist. Vorliegend wird eine rekursive Struktur erster Ordnung mit einer Verzögerung angesetzt, wobei grundsätzlich auch andere Darstellungen möglich sind. Die digitale Darstellung $H_{lp}(z)$ einer Transfergleichung im z-Raum ist in Gleichung (36) angegeben, wobei durch diese - bezogen auf Fig. 6 - das Verhältnis der demodulierten Amplitude $A_1^*$ zu der aus dem digitalen Modell DM ausgehenden Ausgangs-Amplitude $A_{s1}^*$ (jeweils im z-Raum) angegeben wird. Dabei sind in Gleichung (36) die Parameter $a_{lp}$ und $_{del}$ jeweils Konstanten, die entsprechend der bei der realen Signalverarbeitung (bzw. Demodulation) auftretenden Verzögerung und Tiefpasscharakteristik einmalig anzupassen sind und dann als konstant angesetzt werden können.

Durch die Konstante $_{del}$ wird insbesondere die Verzögerung beschrieben, während durch $a_{lp}$ insbesondere die Tiefpas-scharakteristik angepasst wird.

$$(36) \qquad H_{lp}(z) = \frac{A_1(z)*}{A_{s1}*(z)} = \frac{a_{lp} z^{-del}}{1-(1-a_{lp})z^{-1}}$$

Aus den beiden Transfergleichungen gemäß Gleichung (35) und Gleichung (36) ergibt sich die digitale Darstellung der Gesamt-Transfergleichung $H_{a,ges}(z)$ im z-Raum gemäß Gleichung (37), durch welche die gesamte, reale Signalverarbeitung (bezogen auf das reale Schwingungssystem) beschreibbar ist und durch welche dementsprechend bezogen auf die digitale Darstellung das Verhältnis zwischen der demodulierten Amplitude $A_1*$ des digitalen Modells und dem, dem digitalen Modell DM zugeführten Amplitudensignal $A_m$ (jeweils im z-Raum) angegeben wird. Wie dies bereits oberhalb in Bezug auf Gleichung (35) erläutert wurde, bilden die Parameter a, g die iterativ anzupassenden Parameter.

$$(37) \qquad H_{a,ges}(z) = \frac{A_1(z)*}{A_m(z)} = H_a(z)H_{lp}(z) = \frac{ga}{1-(1-a)z^{-1}} \frac{a_{lp} z^{-del}}{1-(1-a_{lp})z^{-1}}$$

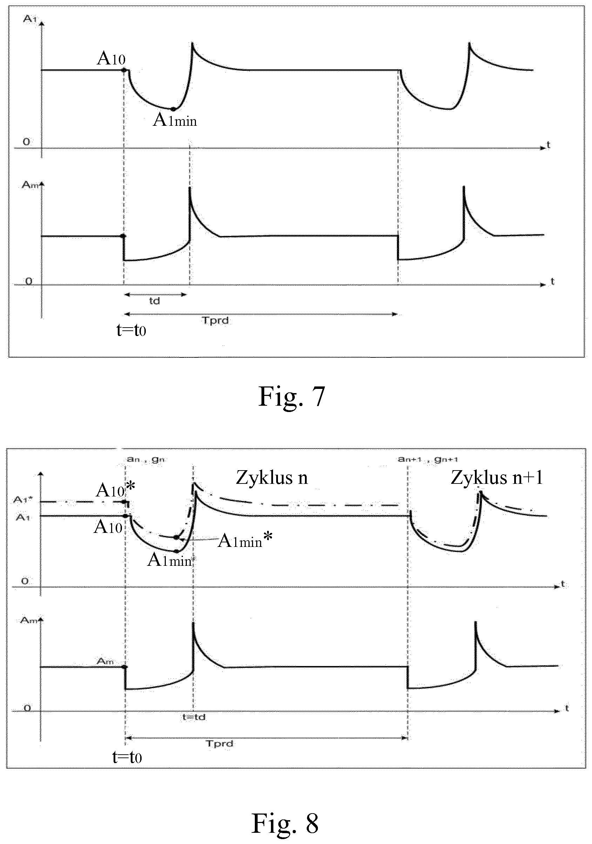

Nachfolgend werden anhand der zweiten Ausführungsform die kurzzeitigen Signalmodulationen sowie die Anpassung der anpassbaren Parameter a, g erläutert. Bei der zweiten Ausführungsform bestehen die kurzzeitigen Signalmodulationen in einer Reduzierung der Amplitude $A_m$ auf die Hälfte für eine kurze Zeitdauer $t_d$, wobei diese Reduzierung jeweils in der gleichen Weise (d.h. mit jeweils gleichem Signalverlauf) periodisch mit der Periode $T_{prd}$ durchgeführt wird. Die Zeitdauer $t_d$ ist dabei viel kleiner als die Periode $T_{prd}$, um eine Beeinflussung der Durchflussmessung zu vermeiden, so dass gilt $t_d \ll T_{prd}$. Diese Signalmodulationen der Amplitude $A_m$ sind (nicht maßstabsgetreu) in dem unteren Diagramm der Fig. 7 schematisch dargestellt, wobei jeweils die Amplitude $A_m$ (bzw. $A_1$ in dem oberen Diagramm der Fig. 7) über der Zeit aufgetragen ist. Zur besseren Veranschaulichung des Signalverlaufs ist in Fig. 7 die Zeitdauer $t_d$ im Verhältnis zu $T_{prd}$ deutlich länger als bei der tatsächlichen Realisierung dargestellt. Wie aus dem oberen Diagramm der Fig. 7 ersichtlich ist, ändert sich aufgrund der Signalmodulationen auch die Amplitude $A_1$ des realen Schwingungssystem. Insbesondere fällt sie von einem eingependelten (settled) Wert $A_{10}$ (bei Zeitpunkt $t=t_0$) mit Beginn der Reduzierung der Amplitude $A_m$ ebenfalls kontinuierlich ab, durchläuft ein Minimum $A_{1min}$ und pendelt sich dann wieder auf den Ausgangswert $A_{10}$ ein. Zusätzlich treten, wie in dem Fachgebiet bekannt ist, jeweils Überschwinger auf, was auch in Fig. 7 dargestellt ist. Diese beschriebenen Signalmodulationen sind deshalb besonders vorteilhaft, da - wie nachfolgend erläutert wird - die beiden anpassbaren Parameter a, g weitgehend unabhängig voneinander angepasst und zum Konvergieren gebracht werden können.

Nachfolgend wird erläutert, wie die Parameter a, g iterativ (über die einzelnen Zyklen) derart angepasst werden, dass die demodulierte Amplitude $A_1*$ des digitalen Modells gegen die Amplitude $A_1$ des realen Schwingungssystems konvergiert. Dies ist schematisch in Fig. 8 dargestellt, wobei die Darstellung weitgehend derjenigen der Fig. 7 entspricht und zusätzlich in dem oberen Diagramm die demodulierte Amplitude $A_1*$ des digitalen Modells (strichpunktiert) eingezeichnet ist. Wie in Fig. 8 dargestellt ist, weist auch die demodulierte Amplitude $A_1*$ entsprechend einen eingependelten Wert $A_{10}*$ (zum Zeitpunkt $t=t_0$) auf und durchläuft ein Minimum $A_{1min}*$ (zu einem im Wesentlichen gleichen Zeitpunkt wie die demodulierte Amplitude $A_1$ des realen Schwingungssystems). Wie bereits oberhalb erläutert wird, wird dabei davon ausgegangen, dass die Frequenz f näherungsweise konstant der Resonanzfrequenz $f_r$ entspricht, so dass die ausschließliche Betrachtung der Amplituden $A_1$ und $A_1*$ bei der Durchführung der Iterationen möglich ist. Zum Vergleich der Amplituden $A_1$ und $A_1*$ werden bei jedem Zyklus jeweils nur zwei Werte derselben, nämlich der eingependelte Wert $A_{10}$ bzw. $A_{10}*$ (insbesondere die jeweils zum Zeitpunkt $t_0$ vorliegenden Werte) und der Wert des Minimums $A_{1min}$ bzw. $A_{1min}*$ (die insbesondere jeweils zu gleichen Zeitpunkten erfasst werden) des jeweiligen Verlaufs von $A_1$ und $A_1*$ in dem betreffenden Zyklus herangezogen. Diese beiden Werte sind in Fig. 8 für den Zyklus n eingezeichnet. Die Wahl dieser zwei Werte für den Vergleich ist deshalb besonders vorteilhaft, da der Parameter a keinen oder nur einen vernachlässigbaren Einfluss auf den eingependelten Wert $A_{10}$ bzw. $A_{10}*$ hat, so dass der Parameter g anhand des eingependelten Wertes weitgehend unabhängig (bzw. orthogonal) von dem Parameter a angepasst werden kann. Dieser Zusammenhang geht insbesondere aus der Sprungantwort $N_a(t)$ gemäß Gleichung (32) hervor, wenn große Zeiten für t eingesetzt werden, da die Funktion der Sprungantwort dann gegen g konvergiert.

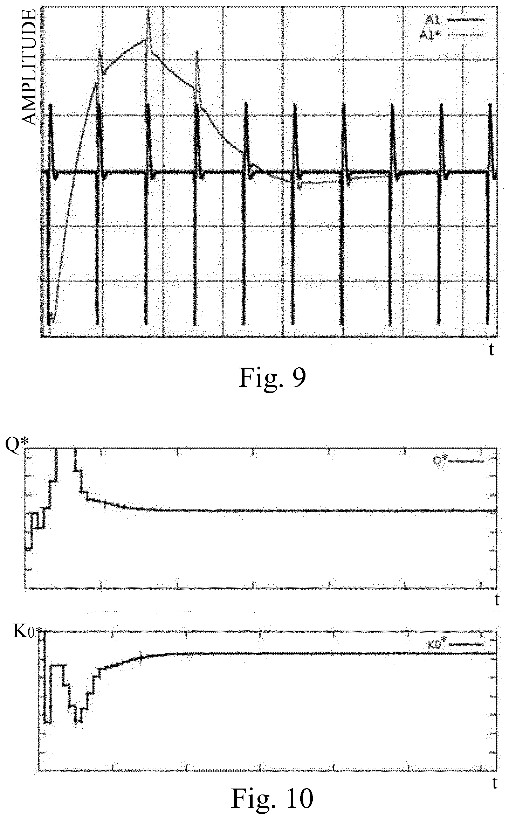

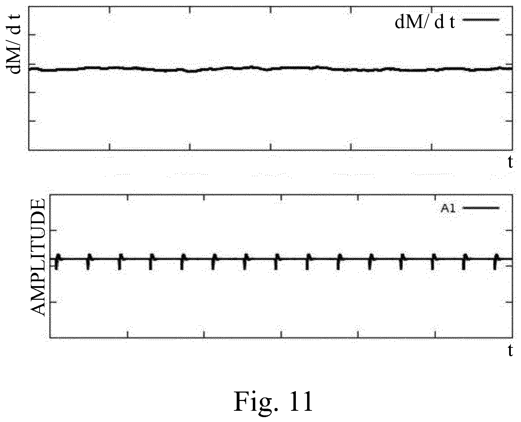

In Fig. 8 ist der Zyklus n zentral eingezeichnet und dessen Dauer entspricht der Periode $T_{prd}$. Direkt an den Zyklus n schließt sich dann der Zyklus n+1 mit der entsprechenden Periode $T_{prd}$ an. Während des Zyklus n werden die aus dem vorangehenden Zyklus (n-1) erhaltenen Parameterwerte für a und g, die mit $a_n$ und $g_n$ bezeichnet werden,

eingesetzt. Während des Zyklus n werden wiederum gemäß einem Anpassungs-Algorithmus die für den nächsten Zyklus (n+1) zu verwendenden Parameterwerte $a_{n+1}$ und $g_{n+1}$ berechnet. Die Ermittlung der für den nächsten Zyklus zu verwendenden Parameterwerte der anpassbaren Parameter erfolgt gemäß einem Anpassungs-Algorithmus, der unterhalb im Detail erläutert wird. Dabei ist in Fig. 8 auch dargestellt, wie die demodulierte Amplitude $A_1^*$ des digitalen Modells aufgrund der iterativen Anpassung der Parameter a, g über die Zyklen hinweg gegen die Amplitude $A_1$ des realen Schwingungssystems konvergiert. Für ein kleineres (und damit der Praxis näherkommendes) Verhältnis von $t_d$ zu $T_{prd}$ ist dieses Konvergieren in Fig. 9 dargestellt, wobei in Fig. 9 die Amplitude über der Zeit aufgetragen ist. In Fig. 9 ist die demodulierte Amplitude $A_1^*$ des digitalen Modells gestrichelt dargestellt, während die Amplitude $A_1$ des realen Schwingungssystems in durchgezogener Linie dargestellt ist. Aus der in Fig. 11 dargestellten Simulation geht hervor, dass die Massedurchflussmessung (zur Bestimmung des Massedurchflusses dM/dt), die in dem oberen Diagramm der Fig. 11 dargestellt ist, aufgrund der kurzzeitigen, in dem realen Schwingungssystem auftretenden Amplitudenänderungen, die in dem unteren Diagramm der Fig. 11 dargestellt sind, nicht beeinflusst wird. Dabei ist in dem oberen Diagramm der Fig. 11 der, im Rahmen von Simulationen ermittelte, dem gemessenen Massedurchfluss entsprechende Massedurchfluss dM/dt über der Zeit t aufgetragen, während in dem unteren Diagramm der Fig. 11 die, im Rahmen von Simulationen ermittelte Amplitude $A_1$ des realen Schwingungssystems über der Zeit t aufgetragen ist.

Gemäß der vorliegenden Ausführungsform wird als Anpassungs-Algorithmus ein LMS-basierter Algorithmus verwendet, wobei - wie unterhalb im Detail erläutert wird - eine (weitgehend) Skalierungs-unabhängige Darstellung verwendet wird. Die allgemeine Form eines LMS-basierten Algorithmus ist in Gleichung (38) allgemein für einen Parameter p angegeben, wobei mit $p_{n+1}$ der für den Zyklus n+1 zu verwendende Wert und mit $p_n$ der für den Zyklus n zu verwendende Wert des Parameters p bezeichnet wird.

$$(38) \qquad p_{n+1} = p_n - \mu \frac{\partial\left[E(e_n^2)\right]}{\partial p}$$

Dabei wird mit $e_n$ der bei dem Zyklus n aufgetretene Fehler bezeichnet, der sich aus der Differenz des Ausgangs des digitalen Modells $y_n$ von dem realen Ausgang $y_{realn}$ ($e_n = y_{realn} - y_n$) während des Zyklus n ergibt. Mit $\mu$ wird das Konvergenzgewinnmaß (convergence gain) bezeichnet, wobei gilt: $0 < \mu < 1$. Mit $E(e_n^2)$ wird der Erwartungswert des quadratischen Fehlers angegeben. Dieser wird in der Regel aus einer Mittelung der bei einer Mehrzahl von vorhergehenden Zyklen erhaltenen Fehler ermittelt. Sowohl die Berechnung des Erwartungswertes als auch dessen Ableitung nach dem Parameter p ist relativ schwierig und aufwändig zu berechnen, so dass der Erwartungswert in dem Fachgebiet relativ häufig durch den quadratischen Fehler ersetzt wird, wie in der nachfolgenden Gleichung (39) dargestellt ist:

$$(39) \qquad \frac{\partial\left[E(e_n^2)\right]}{\partial p} \longrightarrow \frac{\partial\left[e_n^2\right]}{\partial p} = 2.e_n.\frac{\partial\left[e_n\right]}{\partial p} = -2.e_n.\frac{\partial\left[y_n\right]}{\partial p}$$

Bei dem letzten Schritt der Umformung in Gleichung (39) ist zu berücksichtigen, dass der reale Ausgang $y_{realn}$ nicht von dem Parameter p des digitalen Modells abhängt. Durch Einsetzen der Gleichung (39) in die Gleichung (38) wird die nachfolgende Gleichung (40) erhalten, wobei mit $\psi_n$ der Gradient während des Zyklus n bezeichnet wird:

$$(40) \qquad p_{n+1} = p_n + 2\mu.e_n.\psi_n \text{ , wobei gilt: } \psi_n = \frac{\partial y_n}{\partial p}\bigg|p = p_n$$

Bei der vorliegenden Ausführungsform werden die beiden Parameter a, g entsprechend dem in Gleichung (40) angegebenen Anpassungsalgorithmus angepasst. Zusätzlich wird eine Skalierungs-unabhängige Darstellung verwendet, um (trotz der tatsächlich auftretenden, hohen Schwankungen der Amplitude) einen konstanten Wert für den Parameter $\mu$ verwenden zu können.

Nachfolgend wird die Anpassung des Parameters g erläutert. Die Skalierung erfolgt dabei durch Division durch den Wert der Amplitude $A_m$ des Amplitudensignals, welches dem digitalen Modell DM zugeführt wird. Die Berechnung des Fehlers $e_n$ bei dem Zyklus n ergibt sich gemäß der nachfolgenden Gleichung (41), wobei die Amplitudenwerte $A_1$ und $A_1^*$ für den Zeitpunkt $t_0$ des Zyklus n eingesetzt werden (in Gleichung (41) als $t_{0,n}$ bezeichnet), was für $A_1$ und $A_1^*$ damit dem jeweils eingependelten Wert $A_{10}$ und $A_{10}^*$ entspricht.

$$(41) \qquad e_n := \frac{A_1 - A_1^*}{A_m}\bigg| t = t_{0,n}$$

Zur Abschätzung des Gradienten $\psi_n$ ist wiederum die Sprungantwort $N_a(t)$ gemäß Gleichung (32) zu betrachten, die für hohe Zeiten (und damit für die hier verwendeten, eingependelten Werte) gegen g konvergiert. Folglich kann $g_n$ einfach aus dem eingependelten Wert der demodulierten Amplitude A1* des digitalen Modells berechnet werden, wobei zusätzlich aufgrund der oberhalb erläuterten Skalierung eine Normierung mit $A_m$ zu erfolgen hat. Dementsprechend ergibt sich die nachfolgende Gleichung (42):

$$(42) \qquad g_n = \frac{A_1^*}{A_m}\bigg| t = t_{0,n}\ ;\ \text{sowie}\ \psi_n = 1$$

Der Gradient $\psi_n$ ist dementsprechend konstant und kann (mit entsprechender Anpassung des Konvergenzgewinnmaßes $\mu$, welches dann als $\mu_g$ bezeichnet wird) als 1 gesetzt werden, wie oberhalb in Gleichung (42) angegeben ist. Daraus ergibt sich für den Parameter g der nachfolgende Anpassungs-Algorithmus, wobei mit $\mu_g$ die Geschwindigkeit der Konvergenz bestimmt wird:

$$(43) \qquad g_{n+1} = g_n + 2\mu_g . e_n\ , \text{wobei}\ 0<\mu g<1$$

Nachfolgend wird die Anpassung des Parameters a erläutert. Die Skalierung erfolgt dabei durch Division durch die Differenz von $A_{10}$ (eingependelter Wert der Amplitude des realen Schwingungssystems) minus $A_{1min}$ (minimaler Wert der Amplitude des realen Schwingungssystems). Für die Anpassung des Parameters a wird jeweils der minimale Wert des Amplitudenverlaufs von $A_1$ und $A_1^*$ verwendet, die jeweils mit $A_{1min}$ und $A_{1min}^*$ bezeichnet werden. Dementsprechend ergibt sich in Bezug auf die Anpassung von a für den Fehler $e_n$ bei dem Zyklus n die in Gleichung (44) angegebene Beziehung:

$$(44) \qquad e_n := \frac{A_{1min} - A_{1min}^*}{A_{10} - A_{1min}}$$

Zur Abschätzung des Gradienten $\psi_n$ wird die Ableitung des Fehlers $e_n$ nach dem Parameter a durch einen Term erster Ordnung genähert. Ferner werden, wie aus der nachfolgenden Gleichung (45) ersichtlich ist, die Skalierungsfaktoren bei der Näherung der Ableitung vernachlässigt und es wird eine entsprechende Anpassung des Konvergenzgewinnmaßes $\mu$, welches dann als $\mu_a$ bezeichnet wird, vorgenommen. Bei der Bildung der Ableitung ist zu berücksichtigen, dass die Amplitude $A_{1min}$ des realen Schwingungssystems nicht von dem Parameter a des digitalen Modells abhängt und somit nur die Ableitung von $-A_{1min}^*$ nach a (wobei für $A_{1min}^*$ der minimale Wert zu dem Zyklus n eingesetzt wird) zu bilden ist. Dementsprechend kann die Ableitung des Fehlers $e_n$ nach dem Parameter a näherungsweise durch $-a_n$ ausgedrückt werden, wie aus der nachfolgenden Gleichung (45) hervorgeht. Werden die damit erhaltenen Beziehungen in die Gleichung (40) eingesetzt, so wird als Anpassungs-Algorithmus für den Parameter a die Gleichung (46) erhalten, wobei durch $\mu_a$ die Geschwindigkeit der Konvergenz bestimmt wird:.

$$(45) \qquad \frac{\partial[e_n]}{\partial a} = \frac{\partial[-A_{1min}^*]}{\partial a} \approx -a_n$$

$$(46) \qquad a_{n+1} = a_n(1 - 2\mu_a . e_n)\ \text{wobei}\ 0<\mu a<1$$

Dementsprechend kann der Parameter g gemäß dem Anpassungsalgorithmus gemäß Gleichung (43) und der Parameter a gemäß dem Anpassungsalgorithmus gemäß Gleichung (46) angepasst werden, wobei die Werte derselben jeweils gegen einen entsprechenden Parameterwert konvergieren. Aus den Parameterwerten a und g können dann jeweils die Parameterwerte für den Qualitätsfaktor Q* des digitalen Modells und der Steifheit K0* des digitalen Modells anhand der nachfolgenden Beziehungen ermittelt werden, die bereits oberhalb hergeleitet wurden:

$$(47) \qquad Q^* = \frac{\omega_r}{2a}.T$$

$$(48) \qquad g = \omega_r.Q^*.\lambda.K_{exc}.K_0^*.K_{sens}$$

Dabei gilt bei der vorliegenden Ausführungsform, dass die konvergierten Parameterwerte für $Q^*$ und $K_0^*$ des digitalen Modells den entsprechenden Parametern Q und $K_0$ des realen Schwingungssystems entsprechen. Dementsprechend können auf diese Weise die, das reale Schwingungssystem charakterisierenden Parameter Q und $K_0$ daraufhin überwacht werden, ob diese signifikant von einem Anfangswert (z.B. bei Inbetriebnahme des Coriolis-Durchflussmessgerätes vorliegende Parameterwerte) oder von einem Sollwert abweichen. In Fig. 10 ist schematisch (ohne dass die Skalierung hier relevant ist) die Konvergenz der Parameter $Q^*$ und $K_0^*$ über der Zeit aufgetragen, wobei in dem oberen Diagramm der Parameter $Q^*$ und in dem unteren Diagramm der Parameter $K_0^*$ aufgetragen ist.

**Patentansprüche**

1.  Verfahren zum Überwachen der Schwingungseigenschaften in einem Coriolis-Durchflussmessgerät (2), das in eine Rohrleitung einsetzbar ist, wobei das Coriolis-Durchflussmessgerät (2) ein zu mechanischen Schwingungen anregbares Schwingungssystem (20) mit mindestens einem, von Medium durchströmbaren Messrohr (A, B) aufweist, wobei das Verfahren nachfolgende Schritte aufweist:

    A) Anregen des Schwingungssystems (20) zu mechanischen Schwingungen gemäß einem Anregungs-Eingangssignal durch mindestens einen Erreger (8), wobei das Anregungs-Eingangssignal in Zeitabständen auftretende, kurzzeitige Signalmodulationen aufweist,
    B) Sensorisches Erfassen mindestens einer Ansprechgröße der hervorgerufenen, mechanischen Schwingungen des Schwingungssystems (20),
    C) Simulieren des angeregten Schwingungssystems (20) durch ein digitales Modell (DM), das mindestens einen anpassbaren Parameter aufweist, wobei das Simulieren das Anregen des digitalen Modells (DM) in der gleichen Weise wie das Schwingungssystem (20), das Berechnen einer Simulations-Ansprechgröße der simulierten Schwingungen gemäß dem digitalen Modell (DM) und das über mehrere Signalmodulationen hinweg durchgeführte, iterative Anpassen des mindestens einen, anpassbaren Parameters derart, dass die Simulations-Ansprechgröße der Ansprechgröße iterativ angenähert wird, umfasst, und
    D) Ermitteln, ob durch den mindestens einen, iterativ ermittelten Parameterwert für den mindestens einen, anpassbaren Parameter oder durch mindestens eine, daraus abgeleitete Größe ein zugehöriger Grenzwert überschritten wird.

2.  Verfahren gemäß Anspruch 1, **dadurch gekennzeichnet, dass** bei dem Schritt des Ermittelns derjenige, mindestens eine Parameterwert des jeweiligen anpassbaren Parameters als iterativ ermittelter Parameterwert eingesetzt wird, bei welchem die zugehörige Simulations-Ansprechgröße der Ansprechgröße zu einem vorbestimmten Mindestmaß angenähert ist.

3.  Verfahren gemäß Anspruch 1 oder 2, **dadurch gekennzeichnet, dass** die kurzzeitigen Signalmodulationen des Anregungs-Eingangssignals jeweils durch eine kurzzeitige Frequenz- und/oder Amplitudenänderung des Anregungs-Eingangssignals gebildet werden.

4.  Verfahren gemäß einem der vorangehenden Ansprüche, **dadurch gekennzeichnet, dass** die kurzzeitigen Signalmodulationen periodisch in dem Anregungs-Eingangssignal auftreten.

5.  Verfahren gemäß einem der vorangehenden Ansprüche, **dadurch gekennzeichnet, dass** die kurzzeitigen Signalmodulationen jeweils durch eine kurzzeitige Amplitudenänderung des Anregungs-Eingangssignals gebildet werden.

6.  Verfahren gemäß einem der vorangehenden Ansprüche, **dadurch gekennzeichnet, dass** die Schritte des Anregens, des sensorischen Erfassens, des Simulierens und des Ermittelns parallel zu einer Durchflussmessung durchgeführt werden.

7.  Verfahren gemäß einem der vorangehenden Ansprüche, **dadurch gekennzeichnet, dass** die Ansprechgröße durch eine Geschwindigkeit der Schwingung und die Simulations-Ansprechgröße durch eine Geschwindigkeit der simulierten Schwingung gebildet werden.

8. Verfahren gemäß einem der vorangehenden Ansprüche, **dadurch gekennzeichnet, dass** das digitale Modell (DM) des angeregten Schwingungssystems (20) auf einer Transfergleichung H(s) der nachfolgenden Form basiert:

$$H(s)= \frac{U_{sens}(s)}{I_{exc}(s)} = \frac{K_{exc}K_0 K_{sens} s}{1+ \dfrac{s}{\omega_r Q}+ \dfrac{s^2}{\omega_r^{\ 2}}}$$

wobei

$U_{sens}$ eine gemessene Sensorspannung im s-Raum ist, die eine Ansprechgröße bildet,
$I_{exc}(s)$ ein Erregerstrom im s-Raum ist, welcher ein Anregungs-Eingangssignal bildet,
$K_{exc}$ ein Skalierungsfaktor ist, durch welchen das Verhältnis einer, auf das Schwingungssystem ausgeübten Erregerkraft $F_{exc}$ zu dem Erregerstrom $I_{exc}$ angegeben wird ($K_{exc}=F_{exc}/I_{exc}$),
$K_0$ eine Steifheit des Schwingungssystems ist,
$K_{sens}$ ein Skalierungsfaktor ist, durch welchen das Verhältnis der gemessenen Sensorspannung $U_{sens}$ zu der Geschwindigkeit der Schwingung $V_1$ angegeben wird ($K_{sens}=U_{sens}/V_1$), $V_1(s)$ die Geschwindigkeit der Schwingung im s-Raum ist, die proportional zu der Sensorspannung $U_{sens}$ ist,
$s=j\omega$ ist, wobei $\omega$ der Anregungsfrequenz des Schwingungssystems entspricht und $j^2=-1$ erfüllt,
$\omega_r$ eine Resonanzfrequenz des jeweils angeregten Schwingungsmodus ist, und
Q ein Qualitätsfaktor ist, der das Abklingverhalten der Schwingungen des Schwingungssystems (20) bei einer einmaligen Anregung beschreibt.

9. Verfahren gemäß einem der vorangehenden Ansprüche, **dadurch gekennzeichnet, dass** das Anregungs-Eingangssignal eine Frequenz aufweist, die im Wesentlichen der Resonanzfrequenz des Schwingungssystems (20) entspricht.

10. Verfahren gemäß Anspruch 9, **dadurch gekennzeichnet, dass** das digitale Modell (DM) des angeregten Schwingungssystems (20) auf einer, in einer digitalen Darstellung vorliegenden Transfergleichung basiert und dass die digitale Darstellung der Transfergleichung zumindest die nachfolgende, aus einem Amplitudenmodell abgeleitete Gleichung $H_{sens}(z)$ als Bestandteil aufweist:

$$H_a(z) = \frac{A_{s1}^{\ *}(z)}{A_m(z)} = \frac{g(1-b)}{1-bz^{-1}}$$

wobei

$$g = \omega_r Q \lambda K_{exc} K_0 K_{sens}$$

ist,

$$\ln b = -\frac{\omega_r}{2Q}T$$

ist,

$A_m(z)$ eine dem digitalen Modell zugeführte Amplitude des Anregungs-Eingangssignals im z-Raum ist,
$A_{s1}^{\ *}(z)$ eine durch das digitale Modell aus $A_m(z)$ erhaltene Ausgangs-Amplitude im z-Raum ist,
$\lambda$ ein allgemeiner Skalierungsfaktor ist, und
T die Periode (Zeitdauer) der Abtastung (Sampling) ist.

**11.** Verfahren gemäß einem der vorangehenden Ansprüche, **dadurch gekennzeichnet, dass** das digitale Modell (DM) des angeregten Schwingungssystems (20) auf einer, in einer digitalen Darstellung vorliegenden Transfergleichung basiert und dass die digitale Darstellung der Transfergleichung zumindest die nachfolgende Gleichung $H_{lp}(z)$ als Bestandteil aufweist, wobei durch die Gleichung $H_{lp}(z)$ eine Verzögerung und eine Tiefpassfilterung, die bei der realen, digitalen Signalverarbeitung der Ansprechgröße auftreten, ausgedrückt werden:

$$H_{lp}(z) = \frac{a_{lp} . z^{-del}}{1 - (1 - a_{lp}) . z^{-1}}$$

wobei
$a_{lp}$ und $_{del}$ Konstanten sind, die entsprechend der durchgeführten, realen digitalen Signalverarbeitung der Ansprechgröße anzupassen sind.

**12.** Verfahren gemäß einem der vorangehenden Ansprüche, **dadurch gekennzeichnet, dass** bei dem iterativen Annähern der Simulations-Ansprechgröße an die Ansprechgröße pro Iterations-Zeitintervall die zu mindestens zwei verschiedenen Zeitpunkten während des zugehörigen Iterations-Zeitintervalls vorliegenden Amplituden der Geschwindigkeit der Schwingung und der Geschwindigkeit der simulierten Schwingung als maßgebliche Vergleichsgrößen herangezogen werden, wobei zu einem der beiden, verschiedenen Zeitpunkte die Amplituden der Geschwindigkeit der Schwingung und der Geschwindigkeit der simulierten Schwingung eingependelt (engl.: settled) sind.

**13.** Verfahren gemäß einem der vorangehenden Ansprüche, **dadurch gekennzeichnet, dass** die anpassbaren Parameter des digitalen Modells durch die Steifheit $K_0$ und durch den Qualitätsfaktor Q oder durch zwei, aus der Steifheit $K_0$ und dem Qualitätsfaktor Q abgeleitete Größen gebildet werden.

**14.** Coriolis-Durchflussmessgerät, das in eine Rohrleitung einsetzbar ist, wobei das Coriolis-Durchflussmessgerät (2) ein zu mechanischen Schwingungen anregbares Schwingungssystem (20) mit mindestens einem, von Medium durchströmbaren Messrohr (A, B) und eine Elektronik (18) aufweist, wobei die Elektronik (18) derart ausgebildet ist, dass durch diese mindestens ein Erreger (8) des Coriolis-Durchflussmessgerätes (2) ansteuerbar ist und dass durch diese ein Sensorsignal von mindestens einem Schwingungssensor (14, 16) auswertbar ist,
wobei die Elektronik (18), mindestens ein Erreger (8) und mindestens ein Schwingungssensor (14, 16) derart ausgebildet sind,

- dass das Schwingungssystem (20) durch den mindestens einen Erreger (8) gemäß einem Anregungs-Eingangssignal, das in Zeitabständen auftretende, kurzzeitige Signalmodulationen aufweist, zu mechanischen Schwingungen anregbar ist,
- dass mindestens eine Ansprechgröße der hervorgerufenen, mechanischen Schwingungen des Schwingungssystems (20) durch den mindestens einen Schwingungssensor (14, 16) erfassbar ist,
- dass durch die Elektronik (18) das angeregte Schwingungssystem (20) durch ein digitales Modell (DM), das mindestens einen anpassbaren Parameter aufweist, simulierbar ist, wobei das Simulieren das Anregen des digitalen Modells (DM) in der gleichen Weise wie das Schwingungssystem (20), das Berechnen einer Simulations-Ansprechgröße der simulierten Schwingungen gemäß dem digitalen Modell (DM) und das über mehrere Signalmodulationen hinweg durchgeführte, iterative Anpassen des mindestens einen, anpassbaren Parameters derart, dass die Simulations-Ansprechgröße der Ansprechgröße iterativ angenähert wird, umfasst, und
- dass durch die Elektronik (18) ermittelbar ist, ob durch den mindestens einen, iterativ ermittelten Parameterwert für den mindestens einen, anpassbaren Parameter oder durch mindestens eine, daraus abgeleitete Größe ein zugehöriger Grenzwert überschritten wird.

**Claims**

**1.** Method for monitoring the vibration characteristics in a Coriolis flowmeter (2), which can be inserted into a pipe, wherein the Coriolis flowmeter (2) features a vibration system (20) which can be excited to produce mechanical vibrations, with at least one measuring tube (A, B) through which medium can flow, wherein said method comprises the following steps:

A) Excitation of the vibration system (20) to produce mechanical vibrations according to an excitation input signal by at least one exciter (8), wherein the excitation input signal features transient signal modulations occurring at intervals,

B) Detection by a sensor of at least one response variable of the generated mechanical vibrations of the vibration system (20),

C) Simulation of the excited vibration system (20) using a digital model (DM), which features at least one adjustable parameter, wherein the simulation comprises the excitation of the digital model (DM) in the same manner as the vibration system (20), the calculation of a simulation response variable of the simulated vibrations according to the digital model (DM) and the iterative adjustment, performed over several signal modulations, of the at least one adjustable parameter in such a way that the simulation response variable approximates the response variable in an iterative manner, and

D) Determination as to whether an associated limit value is exceeded by the at least one parameter value determined in an iterative manner for the at least one adjustable parameter or by at least one variable which is derived therefrom.

2. Method as claimed in Claim 1, **characterized in that** - during the determination step - at least one parameter value of the adjustable parameter is used as the parameter value which is determined iteratively, wherein at said value the corresponding simulation response variable approaches the response variable by a predefined minimum degree.

3. Method as claimed in Claim 1 or 2, **characterized in that** the transient signal modulations of the excitation input signal are formed in each case by a temporary change in the frequency and/or the amplitude of the excitation input signal.

4. Method as claimed in one of the previous claims, **characterized in that** the transient signal modulations occur periodically in the excitation input signal.

5. Method as claimed in one of the previous claims, **characterized in that** the transient signal modulations are formed in each case by a temporary variation in the amplitude of the excitation input signal.

6. Method as claimed in one of the previous claims, **characterized in that** the steps involving the excitation, the detection by sensor, the simulation and the determination are carried out in parallel to a flow measurement.

7. Method as claimed in one of the previous claims, **characterized in that** the response variable is formed by a velocity of the vibration and the simulation response variable is formed by a velocity of the simulated vibration.

8. Method as claimed in one of the previous claims, **characterized in that** the digital model (DM) of the excited vibration system (20) is based on a transfer equation H(s) of the following form:

$$\text{H(s)} = \frac{U_{sens}(s)}{I_{exc}(s)} = \frac{K_{exc}K_0K_{sens}s}{1 + \dfrac{s}{\omega_r Q} + \dfrac{s^2}{\omega_r^2}}$$

where

$U_{sens}$ is a measured sensor voltage in the s-space, which forms a response variable,

$I_{exc}(s)$ is an excitation current in the s-space, which forms an excitation input signal,

$K_{exc}$ is a scaling factor which defines the ratio of the excitation force $F_{exc}$, which is exerted on the vibration system, to the excitation current $I_{exc}$ ($K_{exc}=F_{exc}/I_{exc}$),

$K_0$ is a rigidity of the vibration system,

$K_{sens}$ is a scaling factor which defines the ratio of the measured sensor voltage $U_{sens}$ to the velocity of the vibration $V_1$ ($K_{sens}=U_{sens}/V_1$),

$V_1(s)$ is the velocity of the vibration in the s-space, which is proportional to the sensor voltage $U_{sens}$,

$s=j\omega$, where $\omega$ corresponds to the excitation frequency of the vibration system and satisfies $j^2=-1$,

$\omega_r$ is a resonance frequency of the excited vibration mode, and

$Q$ is a quality factor, which describes the decay behavior of the vibrations of the vibration system (20) during a single excitation.

9. Method as claimed in one of the previous claims, **characterized in that** the excitation input signal has a frequency, which essentially corresponds to the resonance frequency of the vibration system (20).

10. Method as claimed in Claim 9, **characterized in that** the digital model (DM) of the excited vibration system (20) is based on a transfer equation presented in a digital representation, and **in that** the digital representation of the transfer equation comprises, as an integral element, at least the following equation $H_{sens}(z)$ derived from an amplitude model:

$$H_a(z) = \frac{A_{s1}^*(z)}{A_m(z)} = \frac{g(1-b)}{1-bz^{-1}}$$

where

$$g = \omega_r Q \lambda K_{exc} K_0 K_{sens},$$

$$\ln b = -\frac{\omega_r}{2Q}T \quad ,$$

$A_m(z)$ is an amplitude of the excitation input signal in the z-space, which is supplied to the digital model,
$A_{s1}^*(z)$ is an output amplitude in the z-space obtained by the digital model from $A_m(z)$,
$\lambda$ is a general scaling factor, and
$T$ is the period (duration) of sampling.

11. Method as claimed in one of the previous claims, **characterized in that** the digital model (DM) of the excited vibration system (20) is based on a transfer equation presented in a digital representation, and **in that** the digital representation of the transfer equation has, as an integral element, at least the following equation $H_{lp}(z)$, wherein the equation $H_{lp}(z)$ expresses a delay and a low-pass filtering that occur during real, digital signal processing of the response variable:

$$H_{lp}(z) = \frac{a_{lp}.z^{-del}}{1-(1-a_{lp}).z^{-1}}$$

where
$a_{lp}$ and $_{del}$ are constants which are to be adapted in accordance with the real digital signal processing of the response variable which is performed.

12. Method as claimed in one of the previous claims, **characterized in that** the iterative approximation of the simulation response variable to the response variable per iteration interval uses the amplitudes of the velocity of the vibration and the velocity of the simulated vibration, which are present at at least two different times during the associated iteration time interval, as significant comparative variables, wherein the amplitudes of the velocity of the vibration and of the velocity of the simulated vibration are settled at one of the two different times.

13. Method as claimed in one of the previous claims, **characterized in that** the adjustable parameters of the digital model are formed by the rigidity $K_0$ and by the quality factor Q or by two variables derived from the rigidity $K_0$ and the quality factor Q.

14. Coriolis flowmeter, which can be inserted into a pipe, wherein the Coriolis flowmeter (2) features a vibration system (20) which can be excited to produce mechanical vibrations, with at least one measuring tube (A, B) through which medium can flow, and an electronics module (18), wherein the electronics module (18) is designed in such a way that it allows at least one exciter (8) of the Coriolis flowmeter (2) to be controlled, and in such a way that it allows the evaluation of a sensor signal of at least one vibration sensor (14, 16),

wherein the electronics module (18), at least one exciter (8) and at least one vibration sensor (14, 16) are designed in such a way,

- that the vibration system (20) can be excited to produce mechanical vibrations by the at least one exciter (8) according to an excitation input signal, wherein the excitation input signal features transient signal modulations occurring at intervals
- that at least one response variable of the mechanical vibrations generated by the vibration system (20) can be measured by the at least one vibration sensor (14, 16),
- that, with the electronics module (18), the excited vibration system (20) can be simulated by a digital model (DM), which has at least one adjustable parameter, wherein the simulation comprises the excitation of the digital model (DM) in the same way as the vibration system (20), the calculation of a simulation response variable of the simulated vibrations according to the digital model (DM) and the iterative adjustment, performed over several signal modulations, of the at least one adjustable parameter in such a way that the simulation response variable iteratively approaches the response variable, and
- that the electronics module (18) makes it possible to determine whether an associated limit value is exceeded by the at least one parameter value determined in an iterative manner for the at least one adjustable parameter or by at least one variable derived therefrom.

**Revendications**

1. Procédé destiné à la surveillance des propriétés de vibration dans un débitmètre Coriolis (2), lequel peut être inséré dans une conduite, le débitmètre Coriolis (2) comportant un système vibrant (20) pouvant être excité en vibrations mécaniques, avec au moins un tube de mesure (A, B) pouvant être parcouru par le produit, le procédé comprenant les étapes suivantes :

A) Excitation du système vibrant (20) en vibrations mécaniques selon un signal d'entrée d'excitation par au moins un excitateur (8), le signal d'entrée d'excitation présentant à intervalles de temps des modulations de signal transitoires,
B) Détection sensorielle d'au moins une variable de réponse des vibrations mécaniques générées du système vibrant (20),
C) Simulation du système vibrant excité (20) par un modèle numérique (DM), qui présente au moins un paramètre adaptable, la simulation comprenant l'excitation du modèle numérique (DM) de la même manière que le système vibrant (20), le calcul d'une variable de réponse de simulation des vibrations simulées selon le modèle numérique (DM) et l'adaptation itérative, effectuée sur plusieurs modulations de signal, de l'au moins un paramètre adaptable, de telle manière que la variable de réponse de simulation est approchée par approximation, de manière itérative, de la variable de réponse, et
D) Détermination si une valeur limite associée est dépassée par excès par l'au moins une valeur de paramètre déterminée de manière itérative pour l'au moins un paramètre adaptable ou par l'au moins une variable qui en est dérivée.

2. Procédé selon la revendication 1, **caractérisé en ce que** lors de l'étape de la détermination, l'au moins une valeur du paramètre adaptable respectif est utilisée comme valeur de paramètre déterminée par itération, valeur pour laquelle la variable de réponse de simulation correspondante est approchée par approximation à un degré minimum prédéterminé de la variable de réponse.

3. Procédé selon la revendication 1 ou 2, **caractérisé en ce que** les modulations transitoires du signal d'entrée d'excitation sont formées chacune par une variation temporaire de la fréquence et/ou de l'amplitude du signal d'entrée d'excitation.

4. Procédé selon l'une des revendications précédentes, **caractérisé en ce que** les modulations de signal transitoires se produisent périodiquement dans le signal d'entrée d'excitation.

5. Procédé selon l'une des revendications précédentes, **caractérisé en ce que** les modulations de signal transitoires sont formées chacune par une variation temporaire de l'amplitude du signal d'entrée d'excitation.

6. Procédé selon l'une des revendications précédentes, **caractérisé en ce que** les étapes d'excitation, de détection sensorielle, de simulation et de détermination sont effectuées en parallèle avec une mesure de débit.

7. Procédé selon l'une des revendications précédentes, **caractérisé en ce que** la variable de réponse est formée par une vitesse de la vibration et la variable de réponse de simulation est formée par une vitesse de la vibration simulée.

8. Procédé selon l'une des revendications précédentes, **caractérisé en ce que** le modèle numérique (DM) du système de vibration excité (20) est basé sur une équation de transfert H(s) de la forme suivante :

$$H(s) = \frac{U_{sens}(s)}{I_{exc}(s)} = \frac{K_{exc}K_0 K_{sens}\, s}{1 + \dfrac{s}{\omega_r Q} + \dfrac{s^2}{\omega_r^2}}$$

où

$U_{sens}$ est une tension de capteur mesurée dans l'espace s, qui forme une variable de réponse,

$I_{exc}(s)$ est un courant d'excitation dans l'espace s, qui forme un signal d'entrée d'excitation,

$K_{exc}$ est un facteur d'échelle, à travers lequel est défini le rapport entre une force d'excitation $F_{exc}$ exercée sur le système vibrant et le courant d'excitation $I_{exc}$ ($K_{exc}=F_{exc}/I_{exc}$),

$K_0$ est une rigidité du système vibrant,

$K_{sens}$ est un facteur d'échelle, à travers lequel est défini le rapport entre la tension de capteur mesurée $U_{sens}$ et la vitesse de la vibration $V_1$ ($K_{sens}=U_{sens}/V_1$),

$V_1(s)$ est la vitesse de la vibration dans l'espace s, qui est proportionnelle à la tension de capteur $U_{sens}$,

$s=j\omega$, où $\omega$ correspond à la fréquence d'excitation du système vibrant et satisfait à $j^2=-1$,

$\omega_r$ est une fréquence de résonance du mode de vibration excité respectif, et Q est un facteur de qualité, qui décrit le comportement de décroissance des vibrations du système vibrant lors d'une seule excitation.

9. Procédé selon l'une des revendications précédentes, **caractérisé en ce que** le signal d'entrée d'excitation présente une fréquence, qui correspond pour l'essentiel à la fréquence de résonance du système vibrant (20).

10. Procédé selon la revendication 9, **caractérisé en ce que** le modèle numérique (DM) du système de vibration excité (20) est basé sur une équation de transfert présente dans une représentation numérique, et **en ce que** la représentation numérique de l'équation de transfert comprend comme élément au moins l'équation suivante $H_{sens}(z)$ dérivée d'un modèle d'amplitude :

$$H_a(z) = \frac{A_{s1}^{*}(z)}{A_m(z)} = \frac{g(1-b)}{1-bz^{-1}}$$

où

$$g = \omega_r Q \lambda K_{exc} K_0 K_{sens},$$

$$\ln b = -\frac{\omega_r}{2Q}T,$$

$A_m(z)$ est une amplitude du signal d'entrée d'excitation dans l'espace z, acheminée au modèle numérique,

$A_{s1}^{*}(z)$ est une amplitude de sortie dans l'espace z obtenue par le modèle numérique de Am(z),

$\lambda$ est un facteur d'échelle général, et

T est la période (durée) de l'échantillonnage.

11. Procédé selon l'une des revendications précédentes, **caractérisé en ce que** le modèle numérique (DM) du système vibrant excité (20) est basé sur une équation de transfert présente dans une représentation numérique, et **en ce que** la représentation numérique de l'équation de transfert comprend comme élément au moins l'équation suivante $H_{lp}(z)$, l'équation $H_{lp}(z)$ exprimant une temporisation et un filtrage passe-bas intervenant dans le traitement réel du signal numérique de la variable réponse :

$$H_{lp}(z) = \frac{a_{lp}.z^{-del}}{1-(1-a_{lp}).z^{-1}}$$

où

$a_{lp}$ et $_{del}$ sont des constantes devant être adaptées à la variable de réponse en fonction du traitement du signal numérique réel effectué.

12. Procédé selon l'une des revendications précédentes, **caractérisé en ce que**, dans l'approche par approximation itérative de la variable de réponse de simulation à la variable de réponse par intervalle de temps d'itération, les amplitudes de la vitesse de la vibration et de la vitesse de la vibration simulée présentes à au moins deux instants différents pendant l'intervalle de temps d'itération associé sont utilisées comme variables comparatives déterminantes, les amplitudes de la vitesse de la vibration et de la vitesse de la vibration simulée se stabilisant au niveau d'un des deux instants différents.

13. Procédé selon l'une des revendications précédentes, **caractérisé en ce que** les paramètres adaptables du modèle numérique sont constitués par la rigidité $K_0$ et par le facteur de qualité Q ou par deux variables dérivées de la rigidité $K_0$ et du facteur de qualité Q.

14. Débitmètre Coriolis, qui peut être inséré dans une conduite, le débitmètre Coriolis (2) comportant un système vibrant (20) avec au moins un tube de mesure (A, B) pouvant être parcouru par le produit, lequel système peut être excité en vibrations mécaniques, et une électronique (18), l'électronique (18) étant conçue de telle sorte qu'elle permet de commander au moins un excitateur (8) du débitmètre Coriolis (2), et de telle sorte qu'elle permet d'exploiter un signal venant d'au moins un capteur de vibration (14, 16),
l'électronique (18), au moins un excitateur (8) et au moins un capteur de vibration (14, 16) étant conçus de telle manière,

- que le système vibrant (20) peut être excité en vibrations mécaniques par l'au moins un excitateur (8) conformément à un signal d'entrée de vibration, qui présente des modulations de signal transitoires se produisant à des intervalles de temps déterminés
- qu'au moins une variable de réponse des vibrations mécaniques générées du système vibrant (20) peut être détectée par l'au moins un capteur de vibration (14, 16),
- que le système vibrant excité (20) peut être simulé par l'électronique (18) au moyen d'un modèle numérique (DM), qui présente au moins un paramètre adaptable, la simulation comprenant l'excitation du modèle numérique (DM) de la même manière que le système vibrant (20), le calcul d'une variable de réponse de simulation des vibrations simulées selon le modèle numérique (DM) et l'adaptation itérative, effectuée sur plusieurs modulations de signal, de l'au moins un paramètre adaptable, de telle manière que la variable de réponse de simulation est approchée par approximation, de manière itérative, de la variable de réponse, et
- que l'électronique (18) permet de déterminer si une valeur limite associée est dépassée par excès par l'au moins une valeur de paramètre déterminée de manière itérative pour l'au moins un paramètre adaptable ou par l'au moins une variable qui en est dérivée.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008059920 A1
- US 20070017274 A1